(19) **Europäisches Patentamt**
**European Patent Office**
**Office européen des brevets**

(11) **EP 3 467 984 A1**

(12) **EUROPEAN PATENT APPLICATION**
published in accordance with Art. 153(4) EPC

(43) Date of publication:
**10.04.2019 Bulletin 2019/15**

(51) Int Cl.:
**H02J 3/00** *(2006.01)*　　　**H02J 13/00** *(2006.01)*

(21) Application number: **17806184.2**

(86) International application number:
**PCT/JP2017/014619**

(22) Date of filing: **10.04.2017**

(87) International publication number:
**WO 2017/208623 (07.12.2017 Gazette 2017/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.05.2016  JP 2016107034**

(71) Applicant: **Hitachi, Ltd.**
**Tokyo 100-8280 (JP)**

(72) Inventors:
- **INUDUKA Tatsuki**
  **Tokyo 100-8280 (JP)**
- **SAOTOME Yuuji**
  **Tokyo 100-8280 (JP)**
- **KANNO Jumpei**
  **Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **SYSTEM MONITORING DEVICE AND PROGRAM**

(57)　An aspect of the present invention includes an input unit that receives an input of measurement information which is information measured by a sensor provided in a target system and an input of peripheral information relating to the target system, a state detection unit that detects a current state of the target system from the received measurement information, a transition probability calculation unit that calculates a transition probability from the current state to another state, based on the current state of the target system detected by the state detection unit, the state transition information of the target system, and the received peripheral information, and a transition state determination unit that determines a next state transited from the current state, based on the calculated transition probability.

[Fig. 5]

**Description**

Technical Field

The present invention relates to a system monitoring device and a program that monitors a state of a system of an electric power system or the like.

Background Art

An electric power system is a large-scale system that is constructed and operated by combining many devices and control methods for stably supplying an electric power. A state of the electric power system can be notated by using physical quantities such as a voltage, a current, a power, and a frequency. The state of the electric power system has a planar extent according to a configuration (hereinafter, referred to as a "system configuration") of the electric power system, and the state (hereinafter, referred to as a "system state") of the electric power system includes a temporal change. Since the state of the electric power system changes greatly due to a power generator and a load connected to the electric power system, various facilities, apparatuses, and control methods are used to maintain a normal state.
There is a discontinuous state change in the electric power system in addition to a continuous state change. That is, while the state change of the electric power system includes an active and discontinuous state change such as control of a facility and an apparatus, switching of a system configuration, and on and off of a power generator, there is occurrence of an accident as the active and discontinuous state change. In the electric power system, an accident that often interferes with power supply may occur. Reduction of a power disconnection range and reduction of recovery when the accident occurs is an indispensable requirement for increasing a supply reliability of the electric power system.
However, recently, an introduction of renewable energy has progressed and load characteristics have been diversified, and thus, the electric power system has many power change factors. In addition, in the electric power system, an accidental accident may occur due to a natural disaster and the like. When this is set as a cause, a state (state of the electric power system) occurring in the electric power system is set as a result, and a "relationship between a cause and a result" can be handled.
By the way, in a case where the relationship between a cause and a result is estimated by a person, personal variations of a person in charge, such as experience, knowledge, and a physical condition, are incorporated. Here, if processing of estimating the relationship between a cause and a result can be realized by signal processing in which a measurement signal is used, a high-speed operation with reduced variations can be expected.
For example, with the progress of an information communication technology in recent years, it is possible to transmit data at a high speed. Therefore, a technology of installing a sensor in an electric power system and utilizing a measurement signal output from the sensor for monitoring the electric power system is spread. For example, a sensor-equipped switch installed in a domestic power distribution system transmits a measurement signal obtained by sampling state values such as a voltage and a current to a server of a master station by using transmission means such as a power line transportation technology and an optical cable. Then, a technology of analyzing a state of the electric power system, such as detection of an accident occurring in the electric power system, estimation of a cause of the accident, an accident point location (estimation of a place where the accident occurred) in addition to a physical quantity such as an electric power flow, is proposed.
When an accident occurs in the electric power system, a transient state change such as a sudden current flow in the electric power system (sensor) may occur. If a cause of the accident can be estimated from a signal (hereinafter, referred to as a "measurement signal") obtained by measuring the electric power system, a recovery work can be supported. A method of associating an equivalent circuit and the measurement signal at the time of the accident is called an accident point location in the electric power system.
PTL 1 discloses an electric power system monitoring system that stores the received monitoring information as recording data, extracts a causal relationship between events and compares with monitoring information recording data, and calculates a conditional probability of each event defined in event definition information. The electric power system monitoring system performs a probabilistic estimation on a future power facility state, based on a conditional probability table, an observation event, and a causal relationship.

Citation List

Patent Literature

PTL 1: JP-A-2013-208042

Summary of Invention

Technical Problem

The above-described PTL 1 discloses a technology in which information to be measured is input in the electric power system, an event occurring in the electric power system is extracted based on the input information, and a probability that the event occurs in the future or the past of the electric power system is calculated. However, the technology described in PTL 1 does not have means for inputting information on the outside (periphery) of the electric power system and is not used for calculating the probability. In reality, an event occurring in the electric power system often occurs due to a cause outside the electric power system. For example, if a case where a ground short-circuit accident occurs in a power distribution line is used as an example, as an electric wire approaches, the wind blows strongly, a tree shakes, and the tree comes into contact with the electric wire, the ground short-circuit accident occurs, a plurality of causes and results outside the electric power system are combined to influence the electric power system, and thereby, an accident may occur.

However, in the above-described PTL 1, since calculation is made by using only the information measured by the electric power system, the event occurring outside the electric power system is not used to improve an accuracy of calculation of a probability that the event occurs.

In addition, PTL 1 does not have means for inputting information on a configuration of the electric power system, a topology (connection form), a geographical disposition (place), time, and the like. However, for example, weather information is information that depends largely on the place and time. Accordingly, even if means for simply inputting the weather information from the outside is prepared, the weather information cannot be associated with the event of the electric power system and cannot be used to improve the accuracy of probability calculation.

The present invention is to predict a future state of a target system by reflecting information obtained from the outside of the target system, in view of the above situations.

Solution to Problem

A system monitoring device according to an aspect of the present invention includes a storage unit that stores state transition information including a plurality of states of a target system and a path of a state transition from one of the plurality of states to another state. In addition, the system monitoring device includes an input unit that receives an input of measurement information which is information that is measured by a sensor which is provided in the target system and an input of peripheral information having a relationship to the target system, and a state detection unit that detects a current state of the target system from the measurement information that is received by the input unit. In addition, the system monitoring device includes a transition probability calculation unit that calculates a transition probability from the current state to another state, based on the current state of the target system that is detected by the state detection unit, the state transition information that is stored in the storage unit, and the peripheral information that is received by the input unit. Furthermore, the system monitoring device includes a transition state determination unit that determines a next state that is transited from the current state, based on the transition probability, and an output unit that outputs a determination result of the transition state determination unit.

Advantageous Effects of Invention

According to the aspect of the present invention of the above-described configuration, by taking not only information obtained from an electric power system but also related peripheral information and using for calculating a transition probability, a prediction accuracy of a next transition state is improved.

A problem, a configuration, and an effect other than those described above will be apparent from the following description on embodiments.

Brief Description of Drawings

Fig. 1 is a schematic diagram illustrating a configuration example of a general electric power system.
Fig. 2 is an explanatory diagram of a state transition of a system.
Fig. 3 is a diagram illustrating an outline of the entire system configuration including a system monitoring device according to a first embodiment of the present invention.
Fig. 4 is a block diagram illustrating an example of a hardware configuration of a computer.
Fig. 5 is a block diagram illustrating an internal configuration of the system monitoring device according to the first embodiment of the present invention.

Fig. 6 is a graph illustrating an analysis example of a measurement signal.

Fig. 7 is a table illustrating a correspondence relationship between a state of the measurement signal and an event according to the first embodiment of the present invention.

Fig. 8 is a diagram (state transition diagram) illustrating an example of the state transition of the system.

Fig. 9 is an explanatory diagram illustrating an example of a relationship between a cause and a result according to the first embodiment of the present invention.

Fig. 10 is an explanatory diagram illustrating an example of a conditional probability of the cause and effect according to the first embodiment of the present invention.

Fig. 11 is a flowchart illustrating a sequence of calculating a transition probability of the state transition of the system according to the first embodiment of the present invention.

Fig. 12 is a flowchart illustrating a cause estimation sequence according to the first embodiment of the present invention.

Fig. 13 is an explanatory diagram illustrating an example of a cause of accident existing in the electric power system according to the first embodiment of the present invention.

Fig. 14 is an explanatory diagram illustrating a probability field and a probability calculation of a multidimensional space according to the first embodiment of the present invention.

Fig. 15 is an explanatory diagram illustrating an example of calculating and setting a spatial distribution of the probability at a spatial probability field according to the first embodiment of the present invention.

Fig. 16 is a diagram illustrating an example of an alarm display screen according to the first embodiment of the present invention.

Fig. 17 is a diagram illustrating an example of a determination logic display screen (modification screen) according to the first embodiment of the present invention.

Fig. 18 is a diagram illustrating an example of a recovery support information display screen according to the first embodiment of the present invention.

Fig. 19 is a diagram illustrating an example of a prior countermeasure proposal screen according to the first embodiment of the present invention.

Fig. 20 is a flowchart illustrating an accident recovery sequence according to the first embodiment of the present invention.

Fig. 21 is an explanatory diagram of a calculation sequence of a particle filter according to a second embodiment of the present invention.

Fig. 22 is an explanatory diagram of general resampling processing of the particle filter.

Fig. 23 is an explanatory diagram of resampling processing using an error diffusion according to the second embodiment of the present invention. Description of Embodiments

Hereinafter, examples of forms for implementing the present invention will be described with reference to the accompanying drawings. Configuration element having substantially the same functions or configurations in the respective drawings are denoted by the same reference numerals, and redundant description will be omitted.

<1. First Embodiment>

[State Monitoring and State Prediction of System]

Since systems relating to energy, transportation (public bus and railroad), production, and the like are large and complicated, there are many difficulties in operation and monitoring of the systems. For example, the system has a planar extent, a state of the system is represented by various kinds of data, and the state of the system changes depends on influence from not only the inside of the system but also the outside of the system. The state is a state or a situation of a monitoring target at a certain time. For this reason, a method of disposing a sensor inside the system, collecting information from the sensor via a network, and analyzing the information is studied and put to practical use.

There are many methods for classifying the state of the system based on the collected information, but there is a method of separating the state into a "normal state" and a "transient state", as one method.

The normal state is, for example, a state in which the state of the system is maintained within a proper range, and no trouble occurs on a management side and a use side of the system.

One transient state refers to a state in which there is a temporal change, and includes an accidental state change that causes inconvenience by going out of an appropriate range like an accident, in addition to an intentional state change that occurs as a result of control.

The accident is an accidental state change, and may hinder a system operation and cause inconvenience to a customer that uses the system. Thus, it is desirable to take a prior countermeasure such that the accident does not occur, and to recover promptly when the accident occurs.

Here, an electric power system will be described as an example of the system.

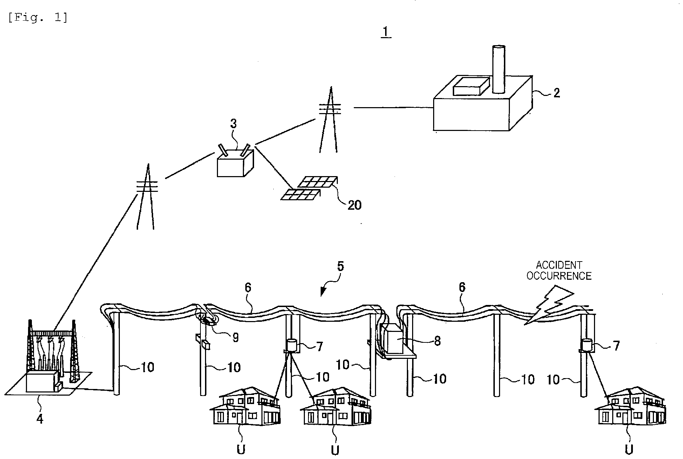

Fig. 1 is a schematic diagram illustrating a configuration example of a general electric power system.

An electric power system 1 is a system that supplies electricity generated by a power plant 2 to a consumer house U via a power transmission line and a power distribution line. For example, the electricity generated by the power plant 2 is sent to a power distribution substation 4 by the power transmission line via a primary substation 3 or the like. An actual power transmission line is three, but one line is illustrated for the sake of convenient description. Electricity generated by a solar power generation facility 20 is also sent to the primary substation 3. Then, the electricity is supplied from the power distribution substation 4 to the consumer house U through the distribution system 5. That is, the electricity transformed by the power distribution substation 4 is sent to the consumer house U via the power distribution line 6 and a pole transformer 7 suspended on the plurality of utility poles 10. A voltage regulator 8 (SVR), a sensor-equipped switch 9, and the like are provided in the middle of the power distribution line 6.

The electric power system is a complicated system to which many control apparatuses and sensors are connected for a stable power supply. Various events occurring in the electric power system are observed by the sensors installed in the electric power system as a state quantity such as a voltage, a current, a power, or the like. The event is an occurrence (phenomenon) that can cause a state change of a monitoring object. The state quantity can be signal-processed by being collected (measured) as a time-series signal using some sensors of the sensor-equipped switch or the like. The Event appearing in the measurement signal is observed as, for example, a normal moderate signal change (normal state) or a transient vibration waveform (transient state). In this way, the waveform appearing in the measurement signal can be handled as a result of the system. For example, when a certain accident occurs in the electric power system, if a current flows rapidly, a transient vibration waveform is observed in the measurement signal. In this way, the cause of the event can be associated with the result appearing in the measurement signal.

As such, the electric power system 1 is a large-scale system having a planar extent connected by an electric wire. Here, as illustrated in Fig. 1, a ground short-circuit accident may occur in which the power distribution line 6 comes into contact with the ground due to a certain cause and thereby the current flows. In the ground short-circuit accident, an impedance between a cable used for a railway and the ground surface significantly decreases, and the current flows from the railway to the ground at the moment when the ground short-circuit accident occurs in the railway, and thereby, a transient response waveform is generated. Here, if the cause of the accident is a contact between the cable and a tree, an instantaneous contact may occur repeatedly. In addition, there is a case where a contact object is heated by a ground short-circuit current and transformed. For example, in a case of a contact with the tree, a ground short-circuit resistance may change with time due to carbonization of the tree. In this way, the transient response waveform of the current generated at the time of an accident differs depending on the cause of the accident.

Then, there is a case where a current flow in the electric power system 1 (power distribution system 5) transiently changes thereby causing a failure in a power generation device or a load device or there is a power disconnection due to a power supply trouble. Such a state change can be handled as a state transition to move from one state to another state.

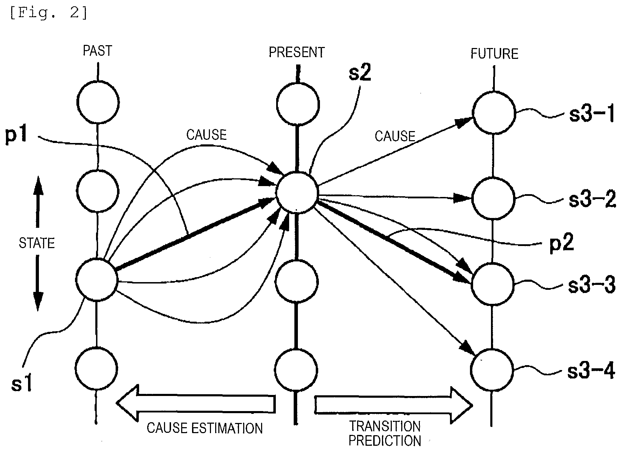

Fig. 2 is an explanatory diagram of the state transition of the system.

Here, the state is denoted by a circle and a transition path is denoted by an arrow, as a notation method of the state transition. In the state transition diagram of Fig. 2, the states of the system in the past, the present, and the future are illustrated from the left to the right, and the state transitions from the past to the present and the state transitions which will be made from the present to the future are described. As each state, there may be a state (transient state) in which an accident occurs, and a stable state (normal state) without an accident.

A relationship between a cause and a result varies in the electric power system. For example, when an accident occurs in the electric power system due to a certain cause, the system state changes, and a signal change appears in the measurement signal, any event can be handled as a result. Any of the results can be handled as the cause of a next state change. By doing so, the relationships between multiple causes and results are combined.

The state of the electric power system is handled as a state including the normal state and the transient state. A switching operation (LRT, SVR of the power distribution system, or switching of the system performed by a switch, and the like) is performed not only in an accident but also in a normal operation. One state transition may be set for such a switching operation, or may be handled as an operation in the normal state.

There is a case where the state transition of the system can be created based on a specification or the like at the time of system development, and a case where the state transition can be created by analyzing the observation results of the system operation. In a case where the specification exists, it is possible to determine the state transition with a clear basis. Meanwhile, in a case where the specification is ambiguous or does not exist, it is considered that the state transition is created by using measurement results obtained by sensors and the like and by using a technique such as a cluster classification and statistical processing.

In the example of Fig. 2, transition is made from a past state s1 to a current state s2 via a transition path p1 (bold line) based on a certain cause. There are a plurality of transition paths (causes) in transition from the past state s1 to the current state s2, and the transition is made via the transition path p1. That is, a state transition occurs due to some events as a main cause, and the state transition is made from the past state s1 to the current state s2. As can be seen from Fig. 2, the past and current system states are fixed, and if the past and current states are known, a cause of the state transition can also be estimated.

In addition, in Fig. 2, it is illustrated that there is movement from the current state s2 to the future state s3 via the transition path p2 (bold line), based on a certain cause. It is predicted that transition to a state s3-3 among states s3-1, s3-2, s3-3, and s3-4 is made as a candidate for a transitionable state from the current state s2.

In the present embodiment, a probability of occurrence of an event that may cause a state transition from the information (for example, measurement information, and peripheral information) acquired at present is calculated, and a state that will occur next is determined. A transition path connecting a candidate state from the current state includes an event that causes an accident.

[Entire Configuration Including System Monitoring Device]

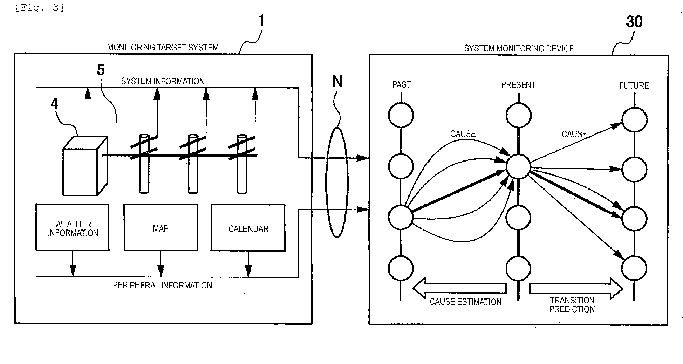

Fig. 3 illustrates an outline of the entire configuration including the system monitoring device according to a first embodiment of the present invention.

The system monitoring device 30 monitors a state and a state transition of an actual system (monitoring target system) such as the electric power system 1.

Hereinafter, each embodiment of the present invention will be described by using the electric power system 1 as a monitoring target system as an example, but if the system has a probabilistic relationship between a cause and a result regarding the state, it is needless to say that the system is not limited and the same effect can be realized. For example, it is possible to apply to a power generation system, a transportation traffic system, a production system, and the like.

The system monitoring device 30 receives the measurement information measured by a sensor installed in a target system and the peripheral information considered to be related to the target system, and predicts a next state which can be transitioned from the current state of the system. In addition, a transition prediction and a basis of the transition prediction are proposed to an operator who monitors and operates the system. Here, the measurement information and the peripheral information include signals measured by a plurality of sensors, information published on the Internet and the like, information calculated by simulation, and the like.

The system monitoring device 30 includes means for receiving system information (system information) and peripheral information from the electric power system 1. The system information is information (measurement information) obtained by detecting a state of a facility, an apparatus, and the like configuring a system (here, the electric power system 1) by using some sensors inside the system. For example, a sensor-equipped switch 9 (see Fig. 1) is installed on a railway from the power distribution substation 4 to the consumer house U, and a system state (voltage, current, and the like) is measured by the sensor-equipped switch 9. A measurement signal of the sensor can be data-collected by a server in a master station via a network N (for example, the Internet) using power line transportation or a technique of an optical cable.

The system information includes disposition of an electric wire, capacity of a facility/apparatus, an interconnection portion and capacity of a load, an interconnection portion and capacity of a distribution power supply, and the like, as data that influences the probability of accident occurrence, although there is no temporal precedence. These can be categorized into preliminarily fixed values and a measurement value collected by a sensor installed in the system.

In addition, the system information includes a history (hereinafter, referred to as "facility history data") of a facility/apparatus. The history of the facility/apparatus includes, for example, an installed year of the facility/apparatus, an environment of the installation portion, the number of times of operation of the switch provided in the facility/apparatus, the past accident record of the facility/apparatus, and the like.

Meanwhile, the peripheral information indicates various kinds of information surrounding the system (for example, the electric power system 1). The peripheral information relating to the state of the electric power system 1 includes weather information (weather forecast, and the like), a calendar, a map, a human flow, a traffic, and the like. The peripheral information may be created or collected by a third party and is input to the system monitoring device 30 via the network N while an environment where the peripheral information can be used is established with development of a network technology in recent years.

The peripheral information may include information that temporally precedes in a state change occurring in the electric power system 1. For example, meteorological data includes prediction information of a weather condition such as solar radiation, wind, and rain. For example, if the weather is rough, the probability of occurrence of events (shaking of a tree shake, falling of a tree, disconnection of a wire due to wind, flood, and the like) in which a facility or an apparatus of the electric power system 1 is affected increases.

In addition, the calendar includes predicted (scheduled) information on a holiday, some events, a construction, and the like. For example, when there is the schedule, a probability of occurrence of some kinds of accident increases more as compared with other cases.

In addition, a map includes information such as a density of consumer houses, a distribution of houses or trees that may cause a contact accident on an electric wire, and a road. For example, a power fluctuation is larger in a region where the density of consumer houses is higher. In addition, the utility pole installed on a road side where a traffic volume is high has a higher probability of a traffic accident in which the utility pole or the electric wire is involved, than the utility pole installed on road side where the traffic volume is low. However, the peripheral information includes a case where there is no need to know a relationship with the electric power system 1 in advance and the relationship is found through some signal processing.

In order to determine the state transition of a system such as the electric power system 1, the system monitoring device 30 uses the peripheral information relating to the system in addition to the measurement information of the system itself. A state of the system may be affected by an external situation of the system indicated by the peripheral information in addition to an internal situation of the system indicated by the measurement information.

For example, the state of the electric power system 1 changes under the influence on the amount of power generation of the solar power generation facility 20 which is one of renewable energy generation systems, but the amount of power generation of the solar power generation facility 20 greatly depends on a weather situation. The weather situation is obtained from information from the weather information transmitted by the Meteorological Agency or the like to information on the past, the present, and the future. In this case, weather information originally not directly related to the electric power system 1 can be used for estimating or predicting the state change of the electric power system 1. In the same manner, in addition to the weather information, the peripheral information sometimes includes information temporally preceding the state of the system.

In the present invention, by calculating a transition probability of the state transition of the system using the peripheral information in addition to the system information (measurement information), it is possible to determine a state transition that is likely to occur or to predict the state transition. Accordingly, the present invention extracts an event (cause) causing the state transition (for example, an accident) from the system information and the peripheral information, and furthermore, assigns a probability of causing a transition to the event. As will be described below, in a case where the system information or the peripheral information is input as a time-series signal, a conversion into an event to which the probability is assigned from the time-series signal is performed.

[Hardware Configuration]

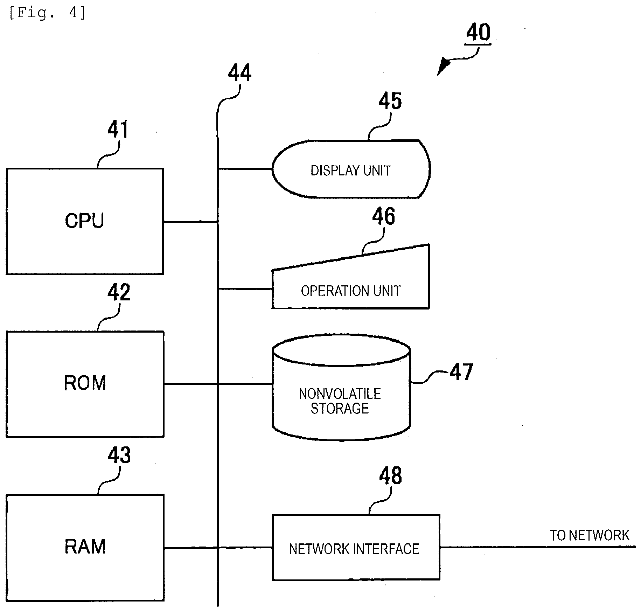

Fig. 4 is a block diagram illustrating a hardware configuration example of the system monitoring device 30.

A hardware configuration of a computer 40 applied to the system monitoring device 30 will be described with reference to Fig. 4.

The computer 40 is hardware used as a so-called computer. The computer 40 includes a CPU (Central Processing Unit) 41, a ROM (Read Only Memory) 42, and a RAM (Random Access Memory) 43, which are arithmetic control devices respectively connected to the bus 44. Furthermore, the computer 40 includes a display unit 45, an operation unit 46, a nonvolatile storage 47, and a network interface 48.

The CPU 41 (an example of a control unit) reads and executes a program code of software for realizing each function according to the present embodiment from the ROM 42. The computer 40 may include a processing device such as an MPU (Micro-Processing Unit) instead of the CPU 41.

A variable, a parameter, and the like that are generated during the arithmetic processing are temporarily written to the RAM 43. The display unit 45 is, for example, a liquid crystal display monitor, and displays a result of the processing performed by the computer 40 to an operator. For example, a keyboard, a mouse, a touch panel, or the like is used as the operation unit 46, and an operator can perform a predetermined operation input and an instruction.

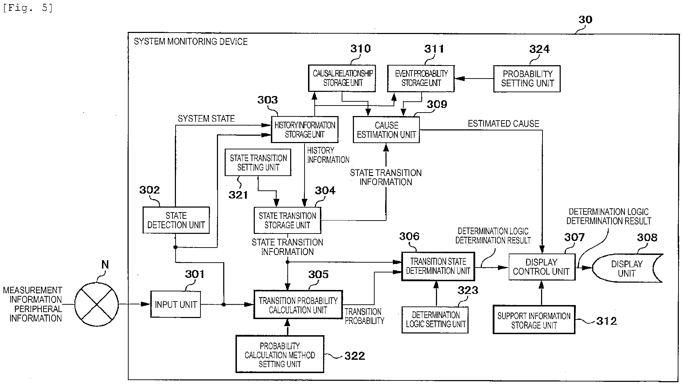

For example, an HDD (Hard Disk Drive), an SSD (Solid State Drive), a flexible disk, an optical disk, a magnetooptical disk, a CD-ROM, a CD-R, a magnetic tape, a nonvolatile memory card, and the like are used as the nonvolatile storage 47. In addition to an OS (Operating System) and various parameters, a program and data for causing the computer 40 to function are recorded in the nonvolatile storage 47. For example, the nonvolatile storage 47 corresponds to a history information storage unit 303, a state transition storage unit 304, a causal relationship storage unit 310, an event probability storage unit 311, and a support information storage unit 312 in Fig. 5 which will be described below.

For example, a NIC (Network Interface Card) and the like are used as the network interface 48, and it is possible to transmit and receive various kinds of data between the respective devices via a network N such as a LAN.

[Internal Configuration of System Monitoring Device]

Fig. 5 is a block diagram illustrating an internal configuration of the system monitoring device 30.

A function of each block of the system monitoring device 30 is realized by the CPU 41 of Fig. 4 that executes a computer program stored in the ROM 42.

The system monitoring device 30 includes an input unit 301, a state detection unit 302, a history information storage unit 303, a state transition storage unit 304, a transition probability calculation unit 305, a transition state determination unit 306, a display control unit 307, and a display unit 308. In addition, the system monitoring device 30 includes a cause estimation unit 309, a causal relationship storage unit 310, an event probability storage unit 311, and a support information storage unit 312. Furthermore, the system monitoring device 30 includes a state transition setting unit 321, a probability calculation method setting unit 322, a determination logic setting unit 323, and a probability setting unit 324.

The input unit 301 receives measurement information that is information measured by a sensor provided in the electric power system 1 which is a monitoring target system, and the peripheral information relating to the electric power system 1, via the network N (the Internet or the like). The input unit 301 corresponds to the network interface 48 in Fig. 4. The input unit 301 outputs the received measurement information and peripheral information to the state detection unit 302, the history information storage unit 303, and the transition probability calculation unit 305.

The state detection unit 302 detects the current state (system state) of the electric power system 1 by analyzing the measurement information received by the input unit 301, and outputs the detection result to the history information storage unit 303.

The history information storage unit 303 stores the measurement information and the peripheral information input from the input unit 301 in association with the date and time. In addition, the history information storage unit 303 stores the current state (system state) of the electric power system 1 input from the state detection unit 302 in association with the date and time. Hereinafter, the measurement information and the peripheral information are collectively referred to as "history information" in some cases.

The state transition storage unit 304 stores a state transition diagram (state transition information, see Fig. 2) including a plurality of states of the electric power system 1 and a transition path (route) of a state transition from one state to another state among the plurality of states. In addition, at least the information on the current state (and a state in the latest (past) state before reaching the current state) of the electric power system 1 is input to the state transition storage unit 304 from the history information storage unit 303. The history information storage unit 303 and the state transition storage unit 304 correspond to the nonvolatile storage 47 in Fig. 4.

The transition probability calculation unit 305 calculates a probability (transition probability) that the electric power system 1 transits from the current state to another state, based on the current state of the electric power system 1 detected by the state detection unit 302, the state transition information stored in the history information storage unit 303, and the peripheral information (event) received by the input unit 301. The transition probability calculation unit 305 can grasp the latest (past) state (state transition) before reaching the current state from the current state of the electric power system 1 and the state transition information. The state transition storage unit 304 may grasp the latest (past) state before reaching the current state and notify the transition probability calculation unit 305 of the past state. Then, the transition probability calculation unit 305 outputs the calculation result to the transition state determination unit 306.

The transition state determination unit 306 determines a next state (state transition) that the electric power system 1 transits from the current state, based on the transition probability calculated by the transition probability calculation unit 305, and outputs the determination result to the display control unit 307. The transition state determination unit 306 can also output a determination logic and a determination logic of the determination result.

The display control unit 307 is an example of an output unit, generates display data including the determination result of the transition state determination unit 306, and outputs the display data to the display unit 308. In addition, the display control unit 307 can generate display data including the determination result of the determination result together with the determination result, and can output the display data to the display unit 308. In addition, the display control unit 307 reads support information corresponding to the determination result (transition state and the like) from the support information storage unit 312 and outputs the support information to the display unit 308.

The display unit 308 displays a screen, based on the display data input from the display control unit 307. The display unit 308 corresponds to the display unit 45 in Fig. 4.

The cause estimation unit 309 fetches the state transition information (including at least the current state) from the state transition storage unit 304, fetches the causal relationship from the causal relationship storage unit 310, and furthermore, fetches the probability of the event that causes the event reaching the current state from the event probability storage unit 311. Then, the cause estimation unit 309 performs processing of estimating the cause for the current state, based on the current state of the electric power system 1, a causal relationship, and a probability of the corresponding event.

The causal relationship in which a state (event) of the electric power system 1 is set as the result and an event caused by the result is set as the cause is stored in the causal relationship storage unit 310. Although the causal relationship is preset, the causal relationship may be updated (modified), based on the history information (measurement information and peripheral information).

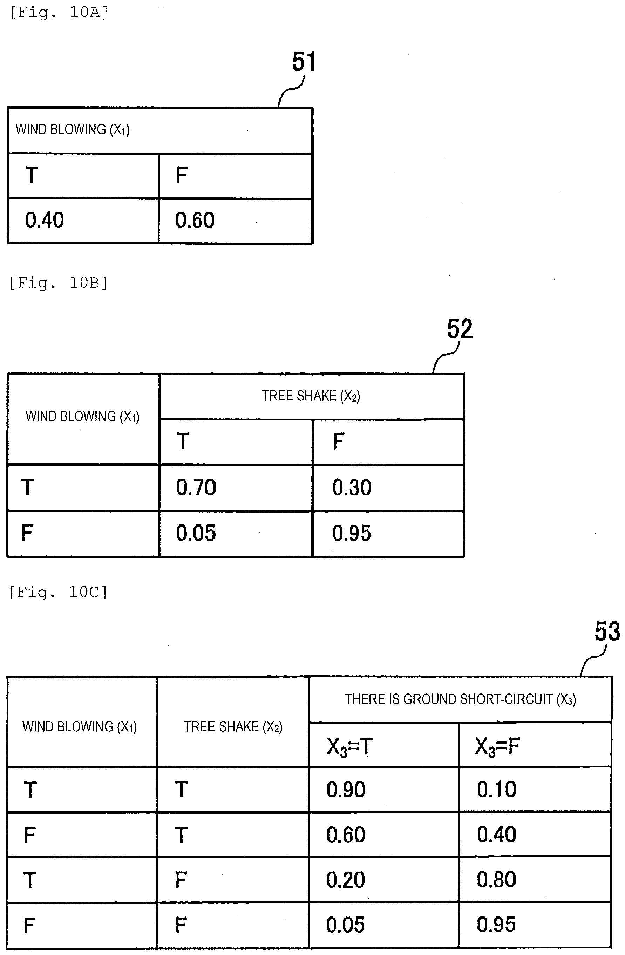

The probability of occurrence of each event is stored in the event probability storage unit 311. In addition, a correspondence relationship between the event causing the current state and the probability of occurrence of the event is stored. In addition, a prior probability and a posterior probability used for probability calculation may be stored. In the present embodiment, an event as a result of a combination of events as a plurality of causes is described in a conditional probability (Bayesian network) (see Fig. 10 which will be described below) and stored in the event probability storage unit 311, and the probabilities are sequentially updated by using the input data (measurement information and peripheral information). The causal relationship storage unit 310 and the event probability storage unit 311 correspond to the nonvolatile storage 47 in Fig. 4.

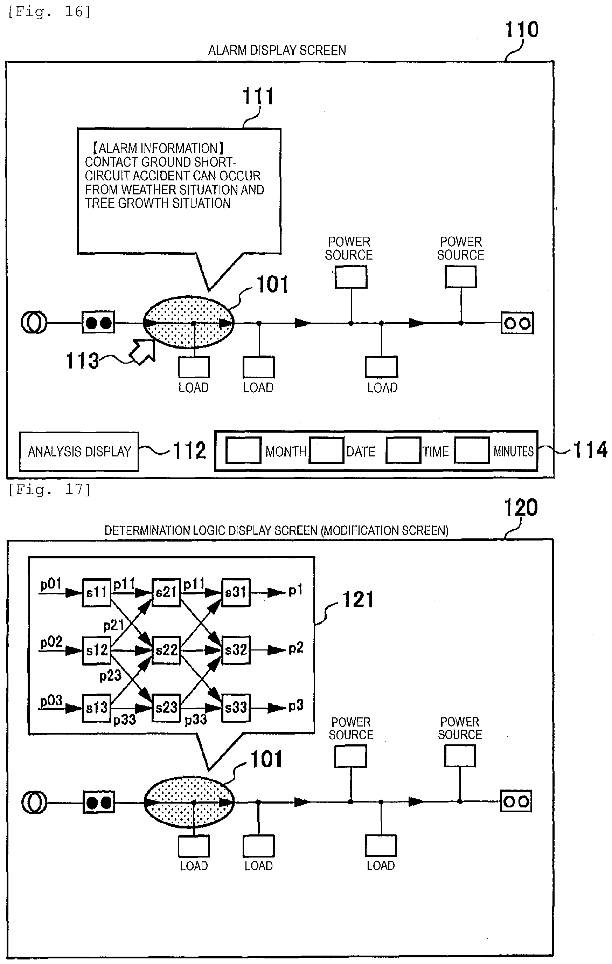

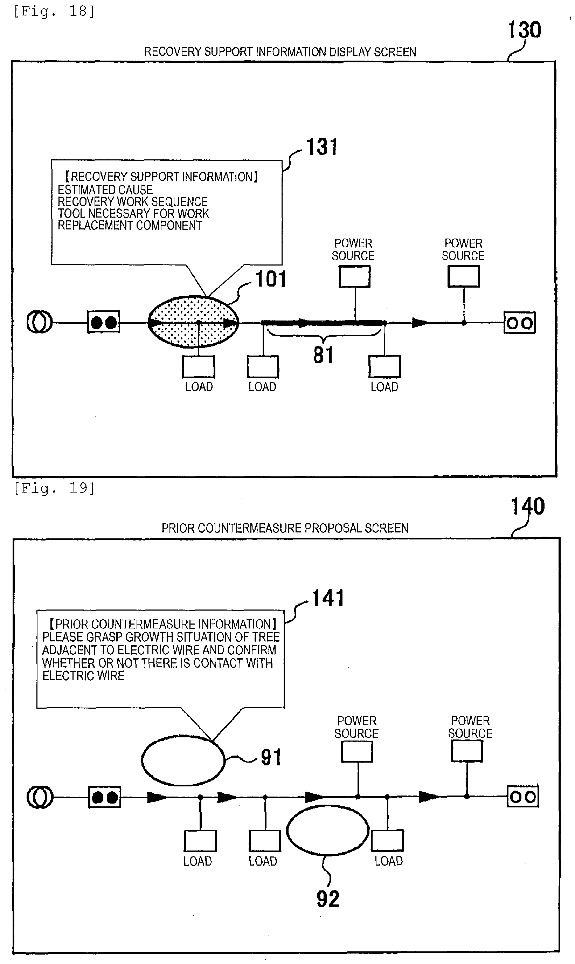

Information (support information) for supporting work and determination of an operator is stored in the support information storage unit 312. For example, there are details of alarm information (Fig. 16), determination logic (Fig. 17), recovery support information (Fig. 18), prior countermeasure information (Fig. 19), and the like as the support information. The determination logic includes a state transition diagram serving as a basis of the state transition, a determination basis (determination condition), and the like.

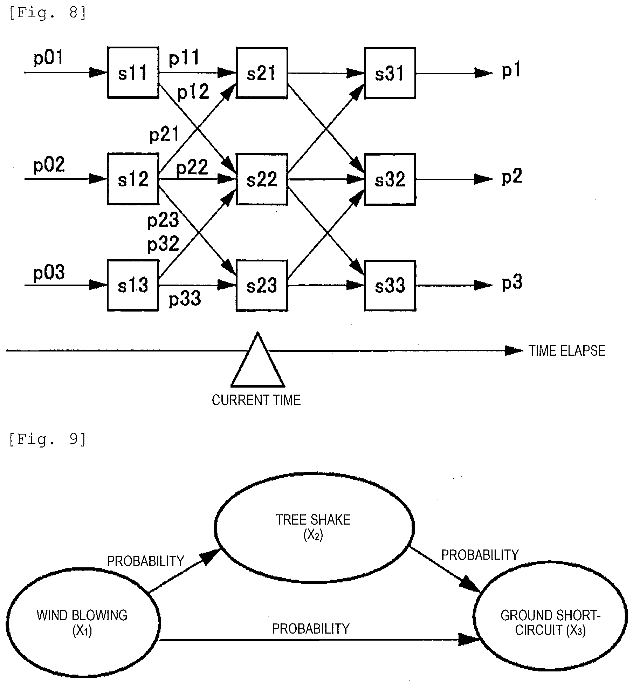

The state transition setting unit 321 sets and modifies a state of the electric power system 1 (system) stored in the state transition storage unit 304 and a transition path between the states (see Fig. 8), based on an instruction from the operation unit 46 (Fig. 4).

The probability calculation method setting unit 322 sets and modifies a transition probability calculation method performed by the transition probability calculation unit 305, based on the instruction from the operation unit 46.

The determination logic setting unit 323 sets and modifies a determination logic of the determination result obtained by the transition state determination unit 306, based on the instruction from the operation unit 46.

The probability setting unit 324 sets and modifies the occurrence probability of each event stored in the event probability storage unit 311, based on the instruction from the operation unit 46.

[Operation of State Detection Unit]

Here, an operation of the state detection unit 302 will be described in detail.

A measurement signal detected by a sensor installed in the electric power system 1 as a state of the electric power system 1 is a time-series signal sampled at an appropriate time interval. The time-series signal is a sequence of sampling values which are continuous in time and does not have a delimitation. Therefore, in general, a measurement signal is cut out from the time-series signal with a predetermined time width (time window) or the number of samples, and this is used as a unit of signal processing. In addition, in a form of the time-series signal, it is difficult to directly extract information as an event from the time-series signal.

In the present embodiment, information obtained by analyzing the measurement signal, or a combination (feature data) of information is handled as an event, and a probability is assigned for each event. Here, in a case where a probability is assigned to the event extracted from the measurement signal, the combination of the measurement signals can be enormous, and thus, the probability is assigned by replacing the measurement signal with the feature data by a signal conversion.

Here, it is necessary to determine how to combine signals to detect the event from the time-series signal. For example, in a case where a part is extracted from a temporally continuous signal (time-series signal), the start and the end on a time axis are determined. For example, a time width to the extent that a waveform at the time of accident is included is determined, a combination of signals within the time width is extracted, and the feature data is calculated by appropriate signal processing. Then, a sequence of shifting to the time when the next feature data is calculated and extracting the combination of the signals again is repeated.

In the related art, many methods are proposed as signal processing for calculating the feature data of the time-series signal. For example, there are FFT (Fast Fourier Transform), Proni analysis, wavelet analysis, instantaneous frequency analysis, and the like. Numerical values calculated by the analysis methods can be used as the feature data of the waveform of the time-series signal. However, the present embodiment does not limit the analysis method of the time-series signal and a type of the feature data which is the calculation result. In addition, a plurality of feature data may be used in combination. Here, a distribution of the frequency components included in the waveform of the time-series signal, a ratio between harmonic components, frequency components and attenuation characteristic of a waveform, a phase change (temporal change in frequency) of the waveform, a shape pattern of the waveform, and the like can be used as the feature data. In addition to the time-series signal, it is possible to use a combination of a probability and feature data relating to some state values.

In the present embodiment, by converting the time-series signal into the feature data and handling the converted feature data using the state detection unit 302, it is possible to reduce the amount of data handled as compared with handling the original time-series signal. In addition, by handling the feature data, there is a case where similarity, a difference, a change, and the like is easily made in a signal comparison. Thereby, in addition to reduction of the amount of data storage, there are merits such as speeding up of data processing, speeding up of data input and output, and the like. In addition, waveform data has characteristics of time location (phase), but by converting the time-series signal into the feature data, information irrelevant to the time location can be collected.

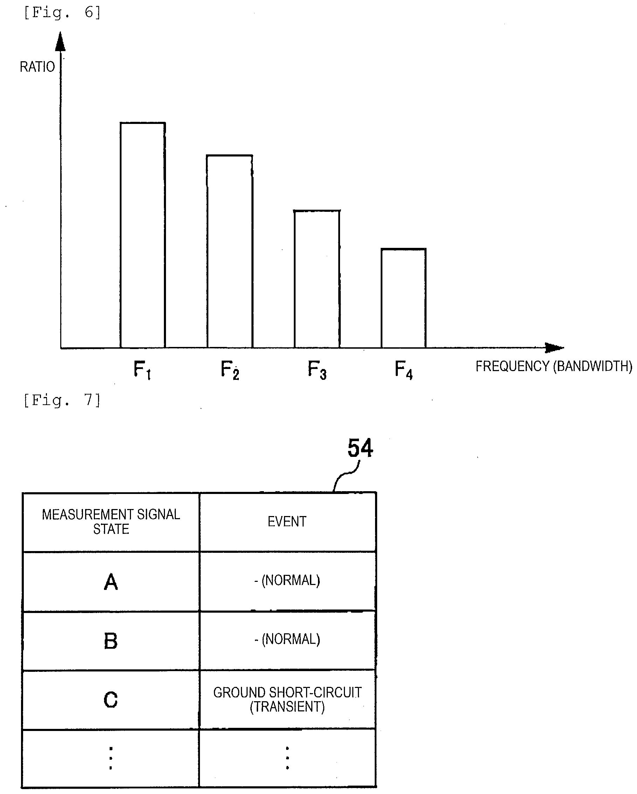

Fig. 6 is a graph illustrating an analysis example of the measurement signal.

In Fig. 6, a horizontal axis represents a frequency (bandwidth), and a vertical axis represents a ratio between frequency components of a target bandwidth with respect to the whole. In this example, the ratio between the frequency components with respect to the whole is illustrated for each of the frequency bandwidths F1, F2, F3, and F4.

Fig. 7 is a table illustrating an example of a correspondence relationship between a state of the measurement signal and an event according to the first embodiment.

A state and event table 54 includes a measurement signal state field and an event field. The measurement signal state field includes information indicating a state of the measurement signal of a certain sensor, and the event field includes information of an event occurring in the system (electric power system 1). The state of the measurement signal is determined by, for example, feature amount of the measurement signal. In this example, the state is classified into states A to C according to the feature data, there is no occurrence of the event (normal state) in the states A and B, and the state C and a ground short-circuit (transient state) are associated with each other.

[Input and Processing of Peripheral Information]

Next, an input and processing of peripheral information will be described.

In the present embodiment, weather data, a calendar, a map, a human flow, a traffic, experience of an operator, and the like are applied as the peripheral information. The peripheral information sometimes includes information temporally preceding a state transition of the electric power system 1. Weather forecast in weather data is an example, and prediction data such as solar radiation, rainfall, and wind are available. In the present embodiment, it is unnecessary to know in advance whether the peripheral information is information preceding accident occurrence or is related to a cause of the accident. It goes without saying that the peripheral information is not limited to the above-described example.

However, in the system monitoring device 30 that uses a probability, it is necessary to pay attention to a method of setting initial data relating to the probability. When accumulation of past data is absent or small when the system monitoring device 30 is powered on for the first time, it is difficult to use probabilistic data. Therefore, in the present embodiment, it is assumed that a configuration for performing the following initial setting is prepared.

- Input means of fetching past data owned by an operator or the like are prepared
- A target system is simulated and the corresponding data is accumulated
- An initial value is set based on a concept of a subjective probability of Bayesian statistics which will be described below

[State Transition Information]

Fig. 8 is a diagram (state transition diagram) illustrating an example of a state transition of a system.

In Fig. 8, a state of the system is represented by a square, a transition path is represented by an arrow, and a direction from the left to the right represents a passage of time in the past, present and future. In Fig. 8, a relationship between states is represented as a "state transition" including temporal directions of the past, present and future. A probability of transition from a certain state to the next state is handled as a "transition probability".

The state transition and the transition probability (these are referred to as "state transition information") can be obtained by statistically processing the past actual data or can be calculated by simulation for system analysis. In addition, the subjective probability may be set based on the concept of Bayesian statistics. In a real time operation, it is possible to update in real time based on the measurement information input from a sensor to the system monitoring device 30.

In the state transition diagram of Fig. 8, there are three states s11, s12, and s13 at a point of past time rather than the current time, transition from the past state to the state s11 is further made via a transition path p01, and in the same manner, a transition from the past sate to the state s12 is made via a transition path p02, and a transition from the past sate to the state s13 is made via a transition path p03.

There are a state s21 via a transition path p11 and a state s22 via a transition path p12 as a transition destination candidate of the past state s11. There are the state s21 via a transition path p21, the state s22 via a transition path p22, and a state s23 via a transition path p23 as a transition destination candidate of the state s12. Furthermore, there are the state s22 via a transition path p32 and a state s23 via a transition path p33 as a transition destination candidate of the state s13.

In the same manner, there are a state s31 and a state s32 as a transition destination candidate of the state s21 at the current time. In addition, there are states s31, s32, and s33 as a transition destination candidate of the state s22. Furthermore, there are the state s32 and the state s33 as a transition destination candidate of the state s23. Furthermore, the state s31 transits to a next state via a transition path p1, the state s32 transits to a next state via a transition path p2, and the state s33 transits to a next state via a transition path p3.

As such, the state transition information associated with a state change of the system is recorded in the state transition diagram. This state transition diagram (that is, state transition information) is stored in the state transition storage unit 304.

[Method of Calculating Transition Probability]

Next, a method of calculating a transition probability using the transition probability calculation unit 305 will be described.

A probability that an event occurs by combining a plurality of causes is represented as a simultaneous probability of each cause. The simultaneous probability can be developed to a conditional probability using the Bayesian theorem. For example, when there are causes X1, X2, and X3, the simultaneous probability P (X1, X2, and X3) at which the causes simultaneously occur can be developed as Expression (1).

$$
\begin{aligned}
P(X_3, X_2, X_1) &= \\
P(X_3 \mid X_2, X_1) \cdot P(X_2, X_1) &= \\
P(X_3 \mid X_2, X_1) \cdot P(X_2 \mid X_1) \cdot P(X_1) & \qquad \cdots (1)
\end{aligned}
$$

Furthermore, by generalizing Expression (1), a development equation of Expression (2) is obtained.

$$
P(X_n, X_{n-1}, \cdots, X_1) = P(X_1)\left( \prod_{i=2}^{n} P(X_i \mid X_{i-1}, X_{i-2}, \cdots, X_1) \right) \qquad \cdots (2)
$$

As such, the transition probability obtained by combining a plurality of causes can be described by the simultaneous probability, and the simultaneous probability can be represented as a product of a conditional probability. That is, it is in a relationship to multiply individual causes as the conditional probability.

(Relationship between Cause and Result)

Hereinafter, an example in which a conditional probability relating to a cause and a result is calculated will be described with reference to Figs. 9 and 10. The example illustrates the cause and the result when a ground short-circuit accident of electric wire occurs due to a tree contact.
Fig. 9 is an explanatory diagram illustrating an example of a relationship between a cause and a result according to the first embodiment.
Fig. 9 exemplifies a relationship between the cause and the result after a tree contact is taken as an accident occurring in the electric power system. Here, For the sake of illustration, the figure is simplified to illustrate the relationship between the cause and the result of a wind and tree shake, and a ground short-circuit accident of an electric wire. There are two kinds of ground short-circuit accidents caused by the wind: a case where the tree shakes due to the wind thereby coming into contact the electric wire, and a case where the electric wire cut by the wind comes into contact with the ground. Here, an event in which the wind blows is set as X1, an event I which the tree shakes is set as X2, and an event in which the ground short-circuit is made is set as X3.

(Conditional Probability)

Fig. 10 is an explanatory diagram illustrating an example of a conditional probability of a cause and a result according to the first embodiment. Fig. 10A illustrates a table 51 of a probability that a wind blows (X1), Fig. 10B illustrates a table 52 of a probability that a tree shakes (X2), and Fig. 10C illustrates a table 53 of a probability that a ground short-circuit occurs (X3). T and F are logic terms and represent true (T) and false (F).
As illustrated in Figs. 10A to 10C, a probability that a result is obtained from a cause is prepared. Here, occurrence of a ground short-circuit accident due to tree shake (tree contact) and occurrence of a ground short-circuit due to disconnection of a wire can be prepared in advance by statistically processing past actual data. In addition, it is assumed that the probability that the wind blows (X1) can be obtained from a weather forecast contained in the peripheral information. Thereby, the probability that the occurred ground short-circuit accident is caused by blowing of the wind (X1) is calculated by using Bayesian theorem (Bayesian equation).
First, the result that shake of a tree (X2) occurs due to the cause in which the wind blows (X1). Next, the result that a ground short-circuit accident (X3) occurs in an electric wire due to the cause in which the trees shakes. The probability (conditional probability) that a ground short-circuit accident occurs due to blowing of the wind can be calculated from the probabilistic relationship between each cause and result. In the same manner, a probability is calculated for other possible causes and it can be determined that a cause including the largest probability value is most likely to occur.

Since a state of the electric power system and a probability of the cause change from moment to moment, the probability is calculated sequentially and the determination is repeated.

The probability that the ground short-circuit accident (X3) caused by tree contact is caused by blowing of the wind (X1) is represented by expression (3). Here, "X1i" indicates that two alternative events of "wind blows" or "wind does not blow" of X1 are switched by the symbol "I". For example, if i = 1, the wind blows, if i = 2 the wind does not blow. Meanwhile, "j" of X1j is determined by an operational sign $\Sigma$ (sigma) in a denominator on the right side. $\Sigma$ (Sigma) is to add by changing within a range where a suffix is taken. For example, a condition is waived in which if j = 1, "wind blows", if j = 2, "wind does not blow".

$$P(X_{1i}|X_3) = \frac{P(X_{1i}) \cdot P(X_3|X_{1i})}{\sum P(X_{1j}) \cdot P(X_3|X_{1j})} \quad \cdots \cdots (3)$$

Here, by reflecting the elements of the intervening tree shake (X2) in equation (3) to develop, Expression (4) is obtained.

$$P(X_1 = T|X_3 = T, X_2) = \frac{P(X_1) \cdot P(X_3, X_2|X_1)}{\sum P(X_{1j}) \cdot P(X_3, X_2|X_{1j})} \quad \cdots \cdots (4)$$

The transition probability calculation unit 305 outputs the transition probability calculated in this way to the transition state determination unit 306.

[Cause Estimation Method]

(First Example of Cause Estimation Method)

Next, a cause estimation method performed by the cause estimation unit 309 will be described.

If a cause and a result of the state transition are only one kind, and if the state transition is detected, the cause is estimated, but generally there are plural causes and it is not uniquely determined. In the present embodiment, in a case where there are many kinds of causes, the cause is probabilistically estimated from a measurement signal (time-series signal) by using Bayesian theorem.

The Bayesian theorem relates to a prior probability and a posterior probability (sometimes referred to as a reverse probability). Here, an occurrence probability of a cause Ei is referred to as P(Ei), a probability that an event F appears at the time of the cause Ei is referred to as P(F|Ei), and it is assumed that these are known as the prior probability. When an event F occurs, the probability (posterior probability) that the cause is Ei can be calculated by the Expression (5).

$$P(Ei|F) = \frac{P(Ei) \cdot P(F|Ei)}{\sum P(Ej) \cdot P(F|Ej)} \quad \cdots \cdots (5)$$

Then, magnitudes of the posterior probabilities P(Ei) corresponding to the respective causes are compared, it is determined that the cause having the greatest probability is "most likely". In a case where an accident occurs in the electric power system 1, the cause Ei of the accident is a cause of causing an accident of a tree contact, a wildlife contact or the like, and in many cases, the number and cause of the accident occurred in the past are known. As such, it is possible to prepare the appearance probability P(Ei) of the cause Ei. In addition, a waveform appearing in the measurement signal when the cause Ei occurs can be obtained by a prior experiment, a simulation, or the like. The waveform can be input to, for example, the state detection unit 302, and feature data of the waveform can be calculated by appropriate signal processing.

Here, if a numerical value is calculated according to the above description, when a ground short-circuit accident (X3) occurs, a probability in which the cause is the wind blow (X1) is given by the following Expression (6).

$$P(X_1 = T \mid X_3 = T)$$

$$= \frac{P(X_3 = T \mid X_1 = T) \cdot P(X_1 = T)}{P(X_3 = T)}$$

$$= \frac{P(X_3 = T, X_1 = T)}{P(X_3 = T)} \qquad \qquad \cdots\cdots(6)$$

$$= \frac{0.90 \cdot 0.70 \cdot 0.40 + 0.20 \cdot 0.30 \cdot 0.40}{0.90 \cdot 0.70 \cdot 0.40 + 0.60 \cdot 0.05 \cdot 0.60 + 0.20 \cdot 0.30 \cdot 0.40 + 0.05 \cdot 0.95 \cdot 0.60}$$

$$= 0.856$$

(Second Example of Cause Estimation Method)

Paying attention to frequency components of the waveform of the time-series signal and setting a component ratio for each bandwidth (event) Fk is referred to as an appearance probability $P(Fk)$, a probability $P(Fk|Ei)$ that an event Fk at the time of a cause of accident Ei occurs is obtained. This is prepared as a prior probability. In this case, for example, the bandwidths F1 to F4 in Fig. 6 become the event Fk.

Next, from a ratio (probability) of the frequency components calculated from the measurement signal, a probability of the cause Ei is calculated by the following Expression (7). Then, it is determined that the cause Ei at which the posterior probability $P(Ei)$ is the largest is the most likely cause. Here, attention is paid to the frequency components, but in addition to this, it is possible to use an attenuation rate of an amplitude of a waveform at the time of an accident, rising characteristics of the waveform, and the like. In addition, it is possible to combine probabilities relating to some state values other than the time-series signal.

$$P(Ei|Fk) = \frac{P(Ei) \cdot P(Fk|Ei)}{\sum P(Ej) \cdot P(Fk|Ej)} \qquad \cdots\cdots(7)$$

(Third Example of Cause Estimation Method)

In addition, as illustrated in the following Expression (8), the probability of the cause Ei can be calculated by combining the probabilities of a plurality of pieces of feature data. With the same setting as the above description, a combination of a plurality of frequency bandwidths and component ratio (probability) is handled as the event Fj, the probability $P(Fj)$ (j = 1 to m) is assigned, and the cause Ei relates to the probability. Here, probabilities of other events can be combined, for example, a combination of the frequency bandwidth and the attenuation factor obtained by the Prony analysis as described above may be handled as an event, and the probability may be assigned. Then, in the same manner as the above case, it is determined that the cause Ei at which the posterior probability $P(Ei)$ is the largest is the most likely cause.

$$P(E_i) = \frac{P(E_i) \cdot \prod_{j=1}^{m} P(F_j|E_i)}{\sum_{i=1}^{n} \left( P(E_i) \cdot \prod_{j=1}^{m} P(F_j|E_i) \right)} \qquad \cdots\cdots(8)$$

Here, a case where the likely cause is not found for the event extracted from the time-series signal is considered. One of the reasons for this is a case where there is not enough cause to actually cause an event, and thus, the event may be rejected. In other words, this sequence corresponds to a filter for removing noise. The present embodiment is characterized in finding a significant event by repeating the above-described combination of the event detection and cause estimation.

By the way, in order to perform the probability calculation, it is necessary to prepare the probability data in advance as described above, and there is a method of calculating the probability from the statistical processing of the past data as a method therefor. However, this method cannot prepare the probability in a case where there is no past data at ab initial stage.

In the present embodiment, two methods are prepared for setting the prior probability at the initial stage.

The first is a method of preparing means for inputting past data relating to a target system from outside and means for calculating a probability by statistical processing (simulation) using data relating to the target system obtained from the outside, and preparing the probability data at the initial time.

The second is a method of using a concept of a subjective probability with respect to the prior probability set at the initial time, based on the Bayesian statistics. Here, the subjective probability is a prior probability that an operator subjectively sets, based on experience, knowledge, and the like of an operator who knows the system to be monitored well. The method of using the subjective probability does not necessarily require statistical processing (specific statistical data) of past data. In Bayesian statistics, there is a sequence called Bayesian update in which the prior probabilities described above are sequentially updated. By sequentially replacing the prior probabilities with the posterior probabilities, even if there is a subjective determination in the initial value of the prior probability, it is possible to gradually modify the prior probability based on the measurement signal (result). In addition, it is naturally possible to combine the above two setting methods to use.

[Transition Probability Calculation Processing]

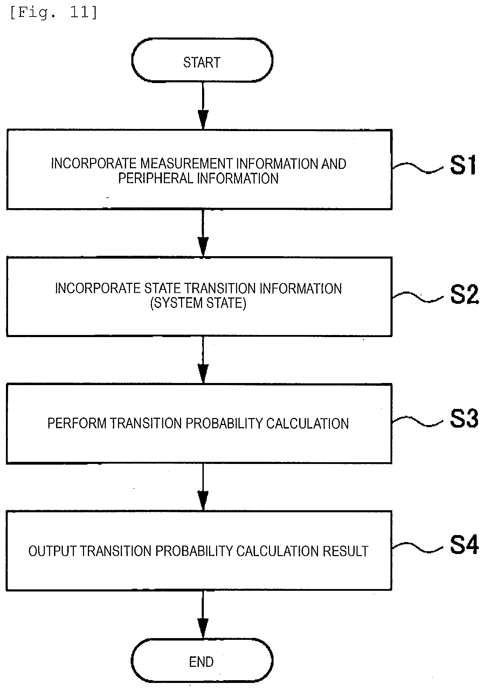

Fig. 11 is a flowchart illustrating processing of calculating a transition probability of a state transition of the system according to the first embodiment. By executing a computer program stored in the ROM 42 by using the CPU 41, transition probability calculation processing of Fig. 11 is realized.

First, the input unit 301 of the system monitoring device 30 fetches measurement information and peripheral information of a sensor via the network N (S1). The state detection unit 302 detects the current state (system state) of the electric power system 1 from the measurement information received by the input unit 301, and outputs the detection result to the history information storage unit 303.

Next, the transition probability calculation unit 305 fetches state transition information (including the system state) from the state transition storage unit 304 (S2).

Next, the transition probability calculation unit 305 calculates a probability (transition probability) of transition from the current state to the next state (S3). That is, the transition probability calculation unit 305 calculates a transition probability of the next state that can be transited from the current state, based on the current state of the electric power system 1 detected by the state detection unit 302, the state transition information stored in the history information storage unit 303, and the peripheral information received by the input unit 301.

Then, the transition probability calculation unit 305 outputs the calculation result of the transition probability to the transition state determination unit 306 (S4). After the processing of step S4 is completed, a series of transition probability calculation processing ends.

Thereafter, the transition state determination unit 306 determines the transition state. That is, the next state with a high possibility of transition from the current state is predicted. The determination result of the transition state determination unit 306 is input to the display control unit 307, and the determination result is displayed on the display unit 308.

[Cause Estimation Processing]

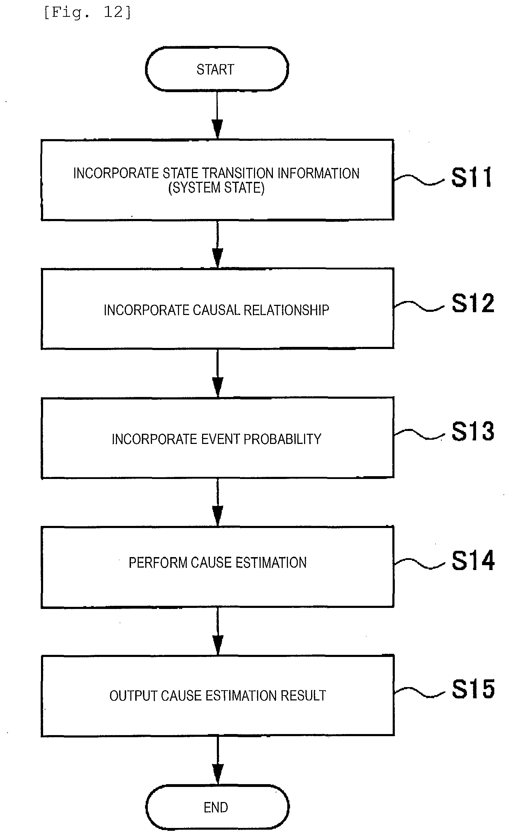

Fig. 12 is a flowchart illustrating cause estimation processing according to the first embodiment. By executing the computer program stored in the ROM 42 using the CPU 41, the cause estimation processing of Fig. 12 is realized.

First, the cause estimation unit 309 of the system monitoring device 30 fetches state transition information (the current state of the electric power system 1) from the state transition storage unit 304 (S 11).

Next, the cause estimation unit 309 fetches a causal relationship which is a relationship between a cause (event) and a result (state) in relation to the state transition information from the causal relationship storage unit 310 (S12).

Next, the cause estimation unit 309 fetches a probability of the event relating to the state transition information from the event probability storage unit 311 (S13).

Next, the cause estimation unit 309 performs a cause estimation for the current state, based on the current state, the causal relationship, and a probability of the corresponding event of the electric power system 1 (S14).

Then, the cause estimation unit 309 outputs the estimation result (estimation cause) to the display control unit 307 (S15). The estimated cause is input to the display control unit 307, and the estimated cause is displayed on the display unit 308.

[Cause of Accident of Electric Power System]

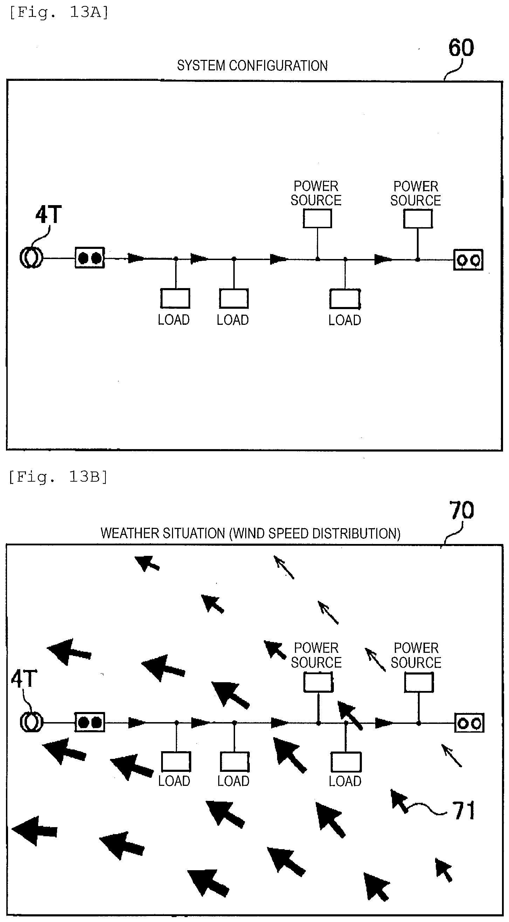

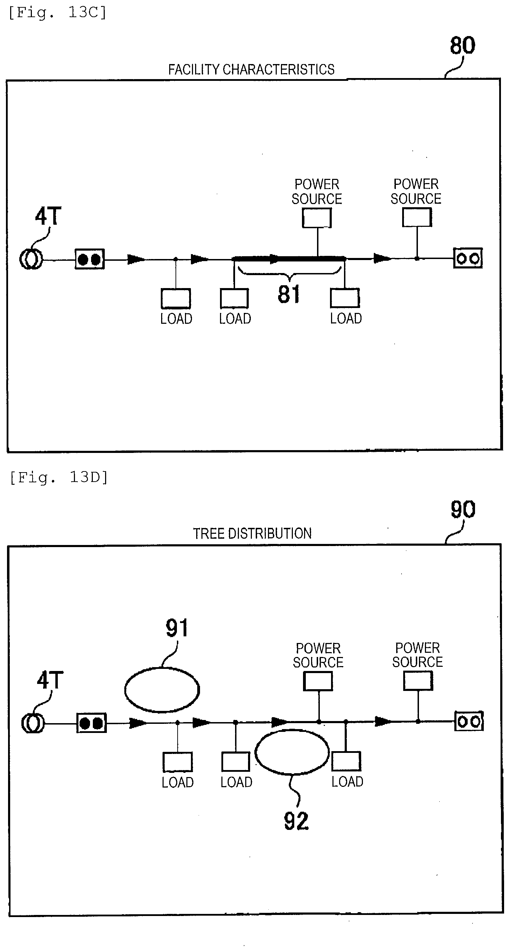

Fig. 13 is an explanatory diagram illustrating an example of the cause of accident that exists in the electric power system according to the first embodiment. Fig. 13A illustrates a system configuration 60, Fig. 13B illustrates a wind speed distribution 70, Fig. 13C illustrates a facility characteristic 80, and Fig. 13D illustrates a tree distribution 90.

As described above, the electric power system is a system with a planar extent. In addition, measurement information and peripheral information also have the planar extent in the same manner. Thus, the probability of illustrating the relationship is also distributed with the planar extent. Furthermore, in a general expression, a relationship between a target system, the measurement information, the peripheral information, the probability, and the like can be expressed as a place (hereinafter, referred to as a "probability field") with a spatial distribution.

The present embodiment is characterized in that the probability is handled as distribution information that spatially spreads. In general, the probability is set as a value associated with some conditions, such as an eye of a dice and an appearance probability (in this case, uniformly distributed). In the present embodiment, a spatial location is given as one of the conditions such that weather information has a geographical distribution of a cloudy rain probability. The space may be two-dimensional coordinates based on a map, or may be a multidimensional space having multiple indices. In a case where the probability changes temporally, the probability of being set in a space is also a function of time. For example, the probability may be sequentially updated based on the distribution result of the probability calculated from the measurement information and the peripheral information. In this way, by spatially distributing the probability, spatial probability calculation can be made. Then, by reading various indices at the same geographical point, a probability of the point can be calculated.

A schematic diagram of the electric power system is described in the system configuration 60 of Fig. 13A. Two breakers (CB) are connected in series to a load (consumer house) side of a power distribution transformer 4T of a power distribution substation 4. Three loads and two power sources are connected to a system between the breakers as an example. For example, a solar power generation facility or the like is applied to the power source. The breaker (the left side in the figure) in which two black circles are illustrated represents close, the breaker (the right side in the figure) in which two white circles are illustrated is open, triangles (Four in this example) indicating the right side of the electric power system represents the breakers.

The wind speed distribution 70 in Fig. 13B is overlapped on the schematic diagram of the electric power system having the same content as the system configuration 60. Arrows 71 in Fig. 13B represents a wind direction and a wind speed. The thicker the arrow 71 is, the higher the wind speed is.

The facility characteristic 80 in Fig. 13C is superimposed on the schematic diagram of the electric power system having the same contents as the system configuration 60. Fig. 13C illustrates that an installation period of a facility of a certain load section 81 on the electric power system is long.

The tree distribution 90 in Fig. 13D is superimposed on the schematic diagram of the electric power system having the same content as the system configuration 60. Fig. 13D illustrates influence ranges 91 and 92 of two trees near the electric power system.

[Probability Field in Multidimensional Space and Probability Calculation]

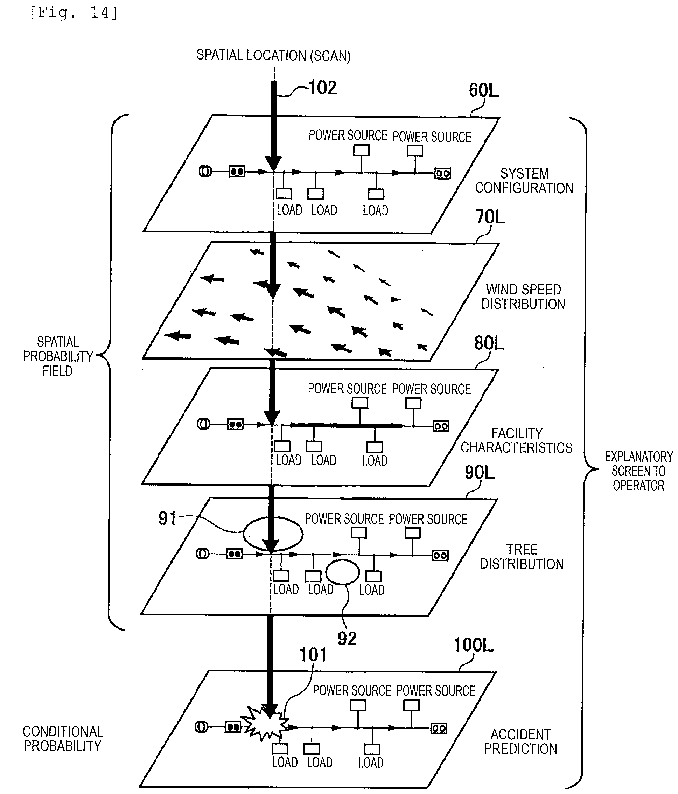

Fig. 14 is an explanatory diagram illustrating a probability field in a multidimensional space and probability calculation according to the first embodiment, and illustrates a sequence of the probability calculation by a spatial probability field.

As described above, the electric power system is a system having a planar extent, and there are a plurality of relationships between causes and results, and these have a distribution depending on a planar place. Therefore, in the present embodiment, a layer having a planar extent is prepared, and a planar distribution of causes is illustrated on each layer and are spatially arranged.

In the example of Fig. 14, a layer 60L of the system configuration 60, a layer 70L of the wind speed distribution 70, a layer 80L of the facility characteristic 80, and a layer 90L of the tree distribution 90 are sequentially illustrated from the top. The bottom stage illustrates an accident prediction layer 100L representing a probability (conditional probability) of the result obtained by combining the probabilities of causes illustrated in the respective layers 60L to 90L. The combined probability is calculated by combining the probabilities of causes located at the same location in each layer 60L to 90L, and a calculation location is indicated by an arrow 102 in the figure. By scanning the calculation location within a surface of each layer, a planar probability distribution can be calculated. In Fig. 14, the calculation location coincides with an accident prediction location 101 of a ground short-circuit accident on the electric power system.

The present embodiment has a characteristic in which the above-described spatial probability field is used to display a screen as means for explaining a relationship between cause and result. Superimposing of a plurality of layers can be displayed on the display unit 45 by a so-called three-dimensional graphics technique, a viewpoint can be switched in a random direction, and display contents can be rewritten in real time. In addition, by moving the viewpoint in a direction orthogonal to the layer to display on the screen, a two-dimensional display can be made, and the same display as in a paper material or a screen display of the related art can be made.

[Calculation and Setting of Spatial Distribution of Probability]

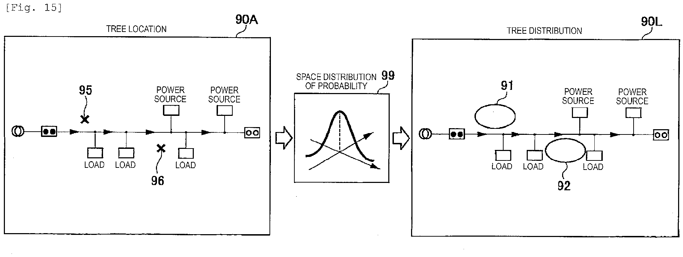

Fig. 15 is an explanatory diagram illustrating an example of calculating and setting a spatial distribution in a spatial probability field according to the first embodiment.

For example, a growing portion of a tree is a point, but when there is a concern of contact with an electric wire due to shake caused by the wind, the influence range of the tree becomes a spatial distribution. The influence range is represented by the spatial distribution of probability. The spatial distribution can use a two-dimensional normal distribution on a two-dimensional plane such as a map. Then, the spatial probability distribution (layer 90L) of the trees is calculated and set by multiplying the tree growth points 95 and 96 in the spatial tree location information 90A by the probability distribution 99. The calculation of the multiplication can be performed by using a convolution integral. The cause of the transition state and/or the probability of the result are stored in the nonvolatile storage 47 as spatial distribution data in which the probability is spatially distributed. In addition, the present embodiment also includes means (operating unit 46) for setting (range setting, probability setting) the spatial distribution of the probability, and means (displaying unit 45) for display.

In addition, the present embodiment can perform calculation such as differentiation, integration, and the like in the spatial probability field, using the spatial filter. When the spatial filter is aimed at, for example, a one-dimensional time-series signal or two-dimensional image data, an effect such as noise removal (integral filter) and edge enhancement (differential filter) can be obtained. When the probability field is used as a target of the spatial filter, there is an effect of widening the influence range of probability if the integral filter is applied. In addition, if the differential filter is applied, there is an effect that a place where probability condition changes is found.

[Example of Operation Screen by Operator]

According to the present embodiment, in order for an operator to adjust details of a display content or to display related items, screen transition can be made by performing a click operation of, for example, a mouse (operation unit 46) or a new display window can be displayed.

Figs. 16 to 19 illustrate examples of operation screens provided to the operator.

(Alarm Display Screen)

Fig. 16 is a diagram illustrating an example of an alarm display screen 110 according to the first embodiment.

In Fig. 16, as an operator places a cursor 113 on an accident prediction location 101 and clicks the cursor, a display window 111 of alarm information is displayed. For example, on the display window 111 of Fig. 16, an alarm message "there is possibility of contact ground short-circuit accident from weather information and tree growth condition" is displayed.

In addition, on the alarm display screen 110 of Fig. 16, a division display button 112 is displayed, and if the operator operates the division display button 112, the alarm display screen 110 is divided into a plurality of layers (spatial probability fields) as illustrated in Fig. 14 to be displayed. Thereby, the operator can grasp a place where there is a high possibility of occurrence of an accident and rapidly take a countermeasure against the accident.

Furthermore, the alarm display screen 110 of Fig. 16 includes a date and time input column 114. If the operator inputs the date and time that the operator wants to view in the date and time input field 114, the alarm display screen 110 of the input date and time is displayed. Thereby, the operator can confirm the necessary information by designating the date and time. The date and time input field 114 may be displayed on not only the alarm display screen 110 but also other screens illustrated in Figs. 17 to 19.

(Determination Logic Display Screen (Modification Screen))

Fig. 17 is a diagram illustrating an example of a determination logic display screen (Modification screen) 120 according to the first embodiment.

As an operator designates the accident prediction location 101 with the cursor 113 or the like, the display window 121 (see Fig. 8) of a logic (state transition diagram) used for predicting a state transition is displayed. The determination logic information is not limited to the state transition diagram, and the determination condition in the transition state determination unit 306 may be displayed. There is, for example, "state transition having the highest transition probability is set as the most likely state transition" or the like as the determination condition. However, in a case where a difference of transition probability between a plurality of state transitions is small, a determination condition such as prioritizing the past performance may be used. Furthermore, the processes (for example, Fig. 9, Fig. 10, and the like) of probability calculation may be displayed as the basis of the prediction, in the display window 121.

In addition, on the determination logic display screen (modification screen) 120, the operator may modify the determination logic or the like of the state transition displayed on the display window 121 by operating the operation unit 46. For example, a state of the state transition diagram or a transition path between the states is designated, and the state transition is modified.

(Recovery Support Information Display Screen)

Fig. 18 is a diagram illustrating an example of a recovery support information display screen 130 according to the first embodiment.

As the operator designates the accident prediction location 101 with the cursor 113 or the like, the display window 131 of the recovery support information indicating a recommended sequence for a recovery work when an accident occurs in the electric power system 1 is displayed. For example, items such as "estimated cause", "recovery work sequence", "tool necessary for work", and "replacement component" are displayed on the display window 131. Thereby, it is possible to support the recovery work and determination of the operator.

(Prior Countermeasure Proposal Screen)

Fig. 19 is a diagram illustrating an example of a prior countermeasure proposal screen 140 according to the first embodiment.

As the operator designates the influence ranges 91 and 92 of the trees with the cursor 113 or the like, the display window 141 of prior countermeasure information is displayed. For example, on the display window 141 of Fig. 19, a prior countermeasure message such as "Please check whether or not growth situation of tree near electric wire is grasped and electric wire is in contact" is displayed. Thereby, the operator grasps a place where an accident is likely to occur in advance, and takes a countermeasure according to the proposed prior countermeasure information, and thus, it is possible to prevent an accident from occurring in advance.

As illustrated in Fig. 16 to Fig. 19 described above, an efficient operation of the operator can be performed by providing a graphical user interface (GUI) such that information that seems necessary is obtained as the operator indicates a spatial location on each display screen. In addition, by supporting understanding of the determination logic, there is an effect that reliability on the determination result can be improved. Such an effect is a big difference from the statistical method, the heuristic method, or the technology similar to artificial intelligence which is the related art, although the internal logic is difficult to disclose.

In a method of the related art, system monitoring reflecting peripheral information outside a system relating to the system (electric power system 1) is not performed. Accordingly, it is impossible to probabilistically associate the first cause (wind is blown) and the last result (wire ground short-circuit), and furthermore, shake of the tree on the way cannot be considered. However, in reality, since a state of the tree greatly influences occurrence of an accident, it is desirable to incorporate the shake of the tree into a probability calculation as in the present embodiment.

In the present embodiment, the probability (event) of each of the causes is prepared, and the probability that an accident occurs as a result of a combination of the causes is calculated. The probability of each cause may change temporally and geographically and may be updated sequentially to reflect the latest state. In this way, probabilistic associations of a plurality of causes can be disclosed.

The probabilistic relationship can be notated by using a technology indicated by terms such as the Bayesian network, hierarchical Bayes or Bayesian graphical model. The present embodiment is not limited to the notation method of the probabilistic relationship.

In the present embodiment, the probability at the time of combining the plurality of causes is calculated as a conditional probability. In addition, in a calculation process, setting and transformation of expression based on Bayesian expression (Bayesian theorem) are used. By doing so, a probability of cause is calculated from an actual result with reference to the probabilistic relationship between the cause and the result of the accident in the electric power system previously prepared.

By the way, when the probabilistic relationship between the cause and the result can be collected as a probability distribution, the probability calculation based on the Monte Carlo method can be used. Specifically, there is a simulated sampling method according to the probability distribution called MCMC (Markov Chain Monte Carlo method) which is the development of the Monte Carlo method. There are a Metropolis method and Gibbs sampling as a method belonging to the MCMC method. A statistical calculation can be performed freely by simulating the given probability distribution using the method to be used for the probability calculation. In the present embodiment, the probability calculation based on the Monte Carlo method can be used for the probability calculation of cause and result.

[Operator Support]

In the present embodiment, in order to realize a stable operation of an electric power system, the number of occurrences of accidents is reduced, and recovery time when the accident occurs is reduced. Accordingly, system information and peripheral information are input, and an accident predicted for an operator is proposed. At this time, it is not preferable to use a calculation result (determination logic) which are difficult to explain in the operation of a system requiring a high reliability like the electric power system.

Therefore, the present embodiment includes means for realizing reliability and verification of the system. Specifically, the present embodiment includes means for proposing a sequence and a result of the probability calculation to the operator, means for modifying the sequence of the probability calculation by the operator, means for performing a prepared sequence of the probability calculation on a trial basis, and the like.

In contrast to this, a method such as neuro calculation or deep learning which is a technique of the related art cannot explicitly represent an internal calculation sequences. Meanwhile, a clustering method can classify and determine a signal, but does not include a calculation sequence, and thus, it is difficult to modify the calculation sequence. As such, many techniques of the related art called artificial intelligence cannot explicitly represent the calculation sequence.

In the above-described method of the related art, it is possible to notate the cause and the result as a probability in a one-to-one relationship, but it is impossible to associate accidents that occur by combining a plurality of causes and results. This also has the same problem in the clustering method which is a signal classification method. In addition, methods such as meta-heuristic and artificial intelligence often do not explicitly show an internal logic, and it is often difficult to explain the internal logic, that is, validity of an output.

[Effect of Present Embodiment]

According to the first embodiment described above, not only information (for example, measurement information and system information) obtained from the electric power system 1 but also relevant peripheral information are fetched and used for calculation of a transition probability, and thereby, there is an effect of improving a prediction accuracy of the next transition state.

Furthermore, by inputting information temporally preceding a state of the electric power system 1 as peripheral information influencing the state of the electric power system 1, there is an effect of improving the prediction accuracy of a state transition from the present to the future.

In addition, by proposing a result of transition prediction and a basis of the transition prediction (Fig. 17) to a person in charge who monitors and operates the electric power system 1, there is an effect of supporting determination in a work sequence.

In addition, there is the effect of preventing an accident from occurring in advance by a prior countermeasure (Fig. 19) of the electric power system 1, and reducing a power disconnection time.

In addition, by proposing the cause of an accident (Fig. 18) which is likely to occur in response to the occurred accident to a person in charge, there is an effect of reducing time for a recovery work.

Furthermore, in a case where there is a temporal and geographical specificity, the specificity is notated by a probability (Figs. 13 and 14) and is reflected by sequentially repeating update, and thereby, there is an effect of improving a prediction accuracy.

[Recovery Sequence at the Time of Occurrence of Accident]

In the related art, in a work from occurrence of an accident of an electric power system to a recovery, there are many manual works such as searching an accident point and determining a cause of the accident before the recovery. Hereinafter, a work sequence from a previously occurred accident to recovery is itemized. Pieces of information in parentheses are the subject or explanation of the work.

- Normal state (state before occurrence of accident)
- Event is detected by using measurement signal (system monitoring device)
- Worker is dispatched when detecting event (manual)
- Accident point is searched near accident site (manual)
- Cause of accident is determined (manual)
- Accident recovery work is started (manual)
- Accident clearance work is confirmed (manual)
- Accident is recovered (manual)
- Returning to normal state is confirmed (system monitoring device)

It is known that the accident occurring in the electric power system are often caused by a peripheral situation of the electric power systems, such as weather in addition to a failure of a facility and an apparatus. In the present embodiment, an accident is predicted by using information (there is a case where temporally preceding information with respect to a system state is included) included in the peripheral information, and thereby, a prior countermeasure or speeding up of a recovery work can be realized.

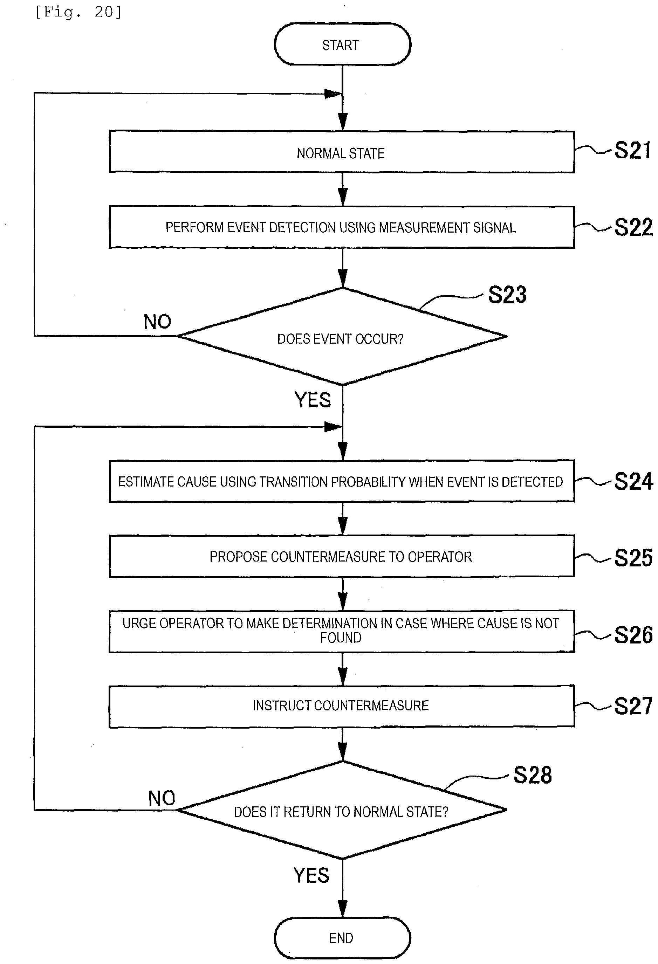

Fig. 20 is a flowchart illustrating an accident recovery sequence according to the first embodiment.

First, it is assumed that a state of the electric power system 1 detected by the CPU 41 (for example, the state detection unit 302) of the system monitoring device 30 is in a normal state (S21). Next, the state detection unit 302 detects an event using a measurement signal received by the input unit 301 (S22).

Next, the state detection unit 302 determines whether or not any event occurs in the electric power system 1 (S23). In a case where an event does not occur (NO in S23), the processing returns to step S21.

Next, in a case where it is determined that an event occurs in step S23 (YES in S23), the cause estimation unit 309 estimates a cause of the event using a transition probability (S24).

Next, the display control unit 307 proposes a countermeasure to the display unit 308, based on the determination result of the cause estimation unit 309, and urges an operator to make a determination (S25). Here, in a case where no cause is found, the operator is urged to make a determination (S26). The processing of "urging the operator to make a determination in a case where no cause is found" in the processing of step S25 will be described in detail in a first modification example of the first embodiment which will be described below.

Next, the display control unit 307 instructs the operator to take a countermeasure by displaying the countermeasure on the display unit 308 (S27). This processing is determined by including whether or not to instruct the countermeasure according to a content of abnormality, such as a case of a serious abnormality such as a serious failure of a facility or an apparatus.

Here, a worker starts an accident recovery work and performs a confirmation work of an accident removal. After the accident removal is confirmed, an accident recovery is performed.

Then, the state detection unit 302 determines whether or not the electric power system 1 is previously returned to a normal state, based on the measurement information input to the input unit 301 (S28). Here, in a case where the electric power system is not returned to the normal state (NO in S28), the processing proceeds to the processing of step S24 and the cause estimation is performed again.

Meanwhile, in a case where the electric power system is previously returned to the normal state in step S28 (YES in S28), a series of accident recovery processing ends.

As such, in the present embodiment, the system monitoring device 30 performs a cause estimation, a countermeasure proposal, and the like, thereby, reducing a sequence which is manually performed. Therefore, the cause estimation can be performed quickly, and the recovery work can be accelerated as compared with the related art.

<2. First Modification Example of First Embodiment>

[Rare Example, Irrationality, Unexpected, No Relation]

In a probabilistic determination, probabilistic situations such as likelihood, consistency, contradiction, contrary, and the like may occur (S26 of Fig. 20). A first modification example of the first embodiment is characterized in that an operator is urged to make a determination by showing the probabilistic situations to the operator.

Probability data prepared in advance cannot include a cause and a result which cannot be assumed in advance. For example, it is difficult to set a probabilistic relationship due to a low frequency of an event that causes an extremely large accident. When the result is caused by the cause, a probabilistically likely cause is obtained by the above-described cause estimation sequence, but an original cause is not prepared in advance, and thus, the likelihood is low. This situation can also occur in a case where noise is included in a measurement signal.

In the first modification example of the first embodiment, in a case where the likelihood of the probabilistic relationship between the cause and the result is low, an operator is urged to make a determination by proposing the situation to the operator.

In addition, in s method based on an appearance frequency, there is a case where a rare occurring state cannot be distinguished by being taken into a state with a high frequency. In a case where the measurement signal is not related to the cause prepared in advance, the measurement signal is determined as noise and is excluded. Thereby, a significant signal is allowed to pass through the state detection unit 302, and the state detection unit 302 operates as a filter for removing noise. By excluding the noise, accuracy of signal analysis can be improved. Furthermore, by removing the noise, an erroneous dispatch of an accident recovery work can be removed.

Furthermore, when various kinds of data are input to the system monitoring device 30, the contents of a plurality of measurement signals may not be matched in some cases. For example, in a case where weather data obtained as another measurement signal indicates that it is a windless state, regardless of whether the cause estimated from the measurement signal is tree contact, the tree is shaken and comes into contact with a railway although there is no wind, and thus, the cause and the result does not coincide with each other. Whether either information contains noise or a tree is shaken due to an unexpected reason cannot be determined from the prior association between the cause and the result. In addition, when the cause estimated from the measurement signal is the tree contact, and when the map data obtained as another measurement signal indicates that there is no tree near the electric power system, the tree shakes although, there is no tree, and thus, the cause and the result do not match.

In the first modification example of the first embodiment, when contradiction is observed in the determination logic, an operator is urged to make a determination by proposing the contradiction to the operator.

As such, it is impossible to associate the cause and the result in a probabilistic manner in advance for the cause that cannot be assumed in advance or is a rare cause and probability cannot be set. In addition, there is a case of being contrary to peripheral information while locating a probabilistically likely reason. In this case, the first modification example of the first embodiment includes means for assuming that there is a possibility that an accident not expected in advance may occur, proposing a contradictory situation to an operator, and urging a determination. Specifically, an alarm to the operator is displayed on the display unit 308.

<3. Second Modification Example of First Embodiment>

[Speed-up, Asynchronous Access]

In predicting a state transition, information (hereinafter, referred to as "relevant information") such as a transition possibility state, a transition cause, and a transition probability is read from a storage unit to be used. The storage unit includes a memory, a hard disk, a data center that is accessed via the network N, a cloud system, and the like.

When the system monitoring device 30 reads the relevant information from the storage unit, a time delay occurs until a search result is obtained due to restrictions such as a transmission capacity and a transmission speed. In addition, when assistance data is searched according to an instruction from an operator, it takes time and labor until the operator inputs information onto a keyboard by considering a search key.

In the second modification example of the first embodiment, when the system monitoring device 30 calculates a probability relating to a state transition, the system monitoring device issues a relevant information search without waiting for an instruction from the relevant data operator and stores in a high-speed buffer. Thereby, when an instruction of the operator is issued, the system monitoring device 30 realizes a high-speed response by performing data access to a buffer as a target. In other words, this operation asynchronously performs data search, based on the state transition. The relevant data which is searched asynchronously and stored in the buffer can be read at extremely high speed because the data may be read from the buffer.

<4. Second Embodiment>

[Probability Calculation by Particle Filter]

In the second embodiment, attention is paid to the Kalman filter as means for calculating a transition probability of state transition. The Kalman filter is widely used as a method for sequentially calculating a probabilistically likely state for a noisy system as a target. In addition, the particle filter which is a derivation method thereof is a numerical calculation method of approximating a probability distribution with many particles, and is characterized in handling a nonlinear and non-Gaussian system. Meanwhile, the amount of calculation is increased because repetitive calculation is made by using many particles. As such, the particle filter is a method of probability calculation with high flexibility but has a problem of calculation time. Although future performance improvement of a computer can be expected, if the speed-up of the calculation can be achieved, the particle filter can be used as a differentiation technology. A method of high speed computation of the particle filter will be reviewed below.

(Speed-up of Particle Filter)

A probability system notated by a state space model is represented below.

$$x_{t+1} = f_t\left(x_t, w_t\right) \qquad \cdots\cdots(9)$$

$$y_t = h_t\left(x_t, v_t\right) \qquad \cdots\cdots(10)$$

Here, $x_t$ is a state vector, $y_t$ is an observation vector, $w_t$ is system noise, and $v_t$ is observation noise. In addition, f represents a system equation, and h represents an observation equation. A subscript t represents a time step. A sequence is provided in which the system noise generated in a system is collected by an observation device that generates the observation noise, and a state value which is most likely to be present among the noises of both is calculated. A system having one input and one output can be simply represented by Expression (11) and Expression (12).

$$x_{t+1} = x_t + w_t \quad\quad \cdots\cdots(11)$$

$$y_t = x_t + v_t \quad\quad \cdots\cdots(12)$$

If the noise is normally distributed in the above-described system, an estimated value can be obtained analytically. However, an event that causes an accident does not necessarily have a normal distribution. Since the particle filter approximates the probability distribution with many particles, a shape of the probability distribution is not restricted.

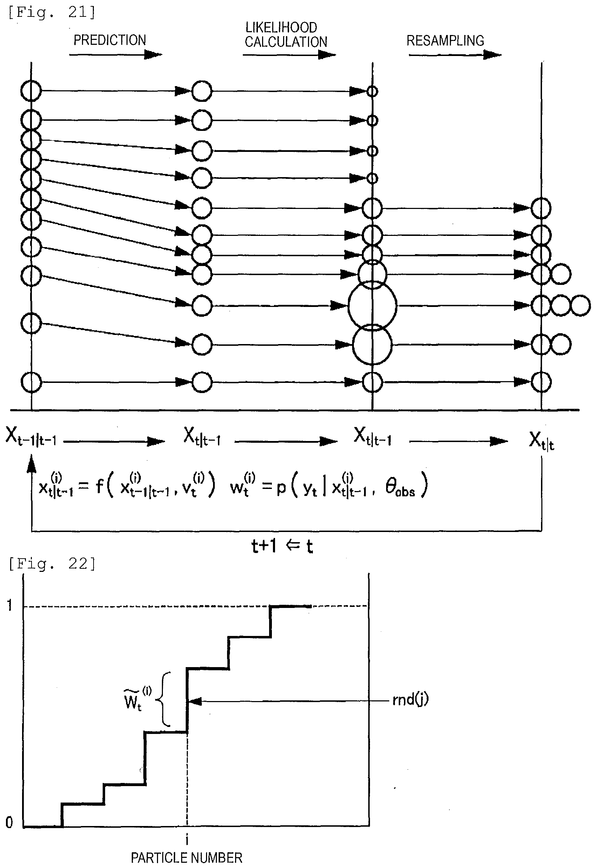

Fig. 21 is an explanatory diagram illustrating a typical calculation sequence of the particle filter.

By setting the probability distribution including an accident cause for system noise and observation noise, simultaneous probabilities of two probability distributions are obtained as a result.

By the way, the particle filter has a property that a weight of the particle (wt(i) in Fig. 21) changes in a calculation process, and a sequence of normalizing the weight and the number of particles is required for each repetitive calculation. This is processing of characterizing the particle filter called resampling.

Contents of Fig. 21 and Figs. 22 and 23 which will be described below are extracted from "Tomoyuki Higuchi, 'Basis of Statistical Modeling for Prediction', Kodansha, 2011". In addition, a general description of the Kalman filter is described in detail in "Toru Katayama, 'Nonlinear Kalman Filter', Asakura Publishing, 978-4-254-20148-2".

In the calculation of the particle filter, processing of handling individual particle and processing of handling the entire particles are mixed. Among the processing, resampling is aimed at normalization, thereby, being an arithmetic that handles the entire particles. When considering application of the probability calculation to an accident response, speed-up is an important requirement. Therefore, the inventor focused on the resampling processing and reviewed a new speed-up method in place of the method of the related art.

Fig. 22 is a graph illustrating a sequence of a general resampling processing of the particle filter.

First, a sequence of the general resampling sequence is illustrated with reference to Fig. 22. The particle number is set to j = 1 to M, and the following processing is performed. As a result, it is possible to create newly arranged particles of an equal weight.

(1) A random number rnd is generated.
(2) A particle number i that satisfies a condition of the following Expression (13).

$$\sum_{k}^{i-1} \widetilde{w}_t^{(k)} < rnd < \sum_{k}^{i} \widetilde{w}_t^{(k)} \quad\quad \cdots\cdots(13)$$

(3) New particles are set as represented by Expression (14).

$$x_t^j = x_{t-1}^i \quad\quad \cdots\cdots(14)$$

Here, it can be interpreted that the resampling processing is to cancel all the errors caused by the integer arithmetic of the respective particles. This sequence is not unique in the particle filter, and it should be noted that it is similar to the error diffusion process known in an image processing field. For example, if a multilevel signal per pixel is input is output by a binary level printer, an error occurs at the input and output. By passing the error to adjacent pixels to cancel the error on the entire screen, an output image corresponding to the multilevel can be obtained by the binary level printer.

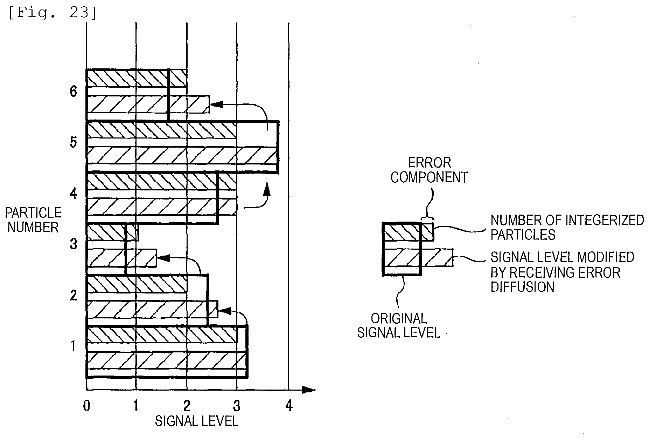

Fig. 23 illustrates the sequence of the resampling processing of the particle filter using error diffusion.

Calculating the number of particles from a particle size (weight) wt(i) corresponds to integerizing the size and a decimal part thereof remains as an error. By diffusing (arrows in the figure) the remaining error to the adjacent particles, the entire errors are canceled. A program can be realized by a simple sequence of integerizing the particle size wt(i), calculating the error, and modifying weights of the adjacent particles. This method completes the processing using the particles and the adjacent particles, and the whole particles may not be referred to. As a result, processing steps are reduced to contribute to speed-up, and parallelization processing can be realized.

As a point to note, the error generated by the last particle is a remainder because there is no particle to receive. In addition, bias may occur in the probability distribution depending on how to select a particle that diffuses the error. However, if the total number of particles increases, influences thereof are slight. Furthermore, by setting a diffusion destination of the error to a plurality of particles, the influence can be reduced.

<5. Other>

Furthermore, the present invention is not limited to the respective embodiments described above, and it goes without saying that various other application examples and modification examples can be taken without departing from the gist of the present invention described in the claims.

For example, in order to describe the present invention in an easy-to-understand manner, the above-described embodiments describe configurations of an apparatus and a system in detail and specifically, and are not limited to those including all the configurations described above. In addition, it is possible to replace part of the configuration of a certain embodiment with a configuration of another embodiment. In addition, it is possible to add a configuration of another embodiment to a configuration of a certain embodiment. In addition, it is also possible to add, remove, and replace other configurations with respect to a part of the configurations of the respective embodiments.

In addition, each of the above-described configurations, a function, a processing unit, processing means, and the like may be realized by hardware by designing or the like a part or all of those with, for example, an integrated circuit. In addition, each of the above-described configurations, a function, and the like may be realized by software by interpreting and executing a program that a processor performs each function. Information such as a program that realizes each function, a table, and a file can be stored in a recording device such as a memory, a hard disk, an SSD (Solid State Drive), or a recording medium such as an IC card, an SD card, and a DVD.

In addition, a control line or an information line indicates what is considered to be necessary for description, and does not necessarily indicate all the control lines or all the information lines for a product. Actually, it may be considered that almost all the configurations are mutually connected.

In addition, in the present specification, the processing step in which time-series processing is described includes not only a processing performed in time series along the described order but also processing (for example, parallel processing or processing performed by an object) performed in parallel or individually although being not necessarily performed in time series.

Reference Signs List

1...electric power system, 9...sensor-equipped switch with sensor, 30...system monitoring device, 40...computer, 41...CPU, 45...display unit, 46...operation unit, 47... nonvolatile storage, 51 to 53...table of probability, 54...event table, 110...alarm display screen, 111...alarm information, 112...division display button, 113...date input column, 120...determination logic display (modification) screen, 121...state transition diagram, 130...restoration support information display screen, 140...prior countermeasure proposal screen, 301...input unit, 302...system state determination section, 303...history information storage unit, 304...state transition storage section, 305...transition probability calculation unit, 306...transition state determination unit, 307...display control unit, 308...display unit, 309...cause estimation unit, 310...causality relationship memory unit, 311...event probability storage unit, 312...support information storage unit, 321...state transition setting unit, 322...probability calculation method setting unit, 323... determination logic setting unit, 324...probability setting unit

**Claims**

1.  A system monitoring device comprising:

    a storage unit that stores state transition information including a plurality of states of a target system and a path of a state transition from one of the plurality of states to another state;
    an input unit that receives an input of measurement information which is information that is measured by a sensor which is provided in the target system and an input of peripheral information having a relationship to the target system;
    a state detection unit that detects a current state of the target system from the measurement information that is received by the input unit;
    a transition probability calculation unit that calculates a transition probability from the current state to another state, based on the current state of the target system that is detected by the state detection unit, the state transition information that is stored in the storage unit, and the peripheral information that is received by the input unit;
a transition state determination unit that determines a next state that is transited from the current state, based on the transition probability; and
an output unit that outputs a determination result of the transition state determination unit.

2. The system monitoring device according to Claim 1,
wherein the peripheral information includes information that temporally proceeds the states of the target system.

3. The system monitoring device according to Claim 1,
wherein the output unit outputs a determination result of the transition state determination unit and a determination logic of the determination result.

4. The system monitoring device according to Claim 1,
wherein the storage unit stores probabilities of a cause and/or a result of the state transition as spatial distribution data in which the probabilities are spatially distributed, and
wherein the output unit outputs the spatial distribution data of the cause and/or the result.

5. The system monitoring device according to Claim 1,
wherein the storage unit stores a conditional probability of an event as a result of a combination of events as a plurality of causes, and
wherein the conditional probability is sequentially updated by the measurement information and the peripheral information.

6. The system monitoring device according to Claim 1,
wherein the output unit outputs an alarm in a case where likelihood of a probabilistic relationship between a cause and a result of the state transition is low.

7. The system monitoring device according to Claim 1, further comprising:
an operation unit that modifies a determination logic that leads to the determination result of the transition state determination unit.

8. The system monitoring device according to any one of Claims 1 to 5,
wherein the target system is an electric power system.

9. A program for causing a computer to perform
a step for receiving an input of measurement information which is information that is measured by a sensor which is provided in a target system and peripheral information having a relationship to the target system;
a step for detecting a current state of the target system from the received measurement information;
a step for calculating a transition probability from the current state to another state, based on the current state of the detected target system, and state transition information including a path of a state transition from one of a plurality of states of the target system and the plurality of states to another state, and the received peripheral information;
a step for determining a next state that is transited from the current state, based on the transition probability; and
a step for outputting a determination result.

[Fig. 1]

[Fig. 2]

[Fig. 3]

MONITORING TARGET SYSTEM 1

5 SYSTEM INFORMATION

4

WEATHER INFORMATION

MAP

CALENDAR

PERIPHERAL INFORMATION

N

SYSTEM MONITORING DEVICE 30

PAST PRESENT FUTURE

CAUSE CAUSE

CAUSE ESTIMATION TRANSITION PREDICTION

[Fig. 4]

40

44

45

41

CPU

DISPLAY UNIT

46

OPERATION UNIT

42

ROM

NONVOLATILE
STORAGE

47

43

48

RAM

NETWORK INTERFACE

TO NETWORK

[Fig. 5]

**30**

SYSTEM MONITORING DEVICE

**310** CAUSAL RELATIONSHIP STORAGE UNIT

**311** EVENT PROBABILITY STORAGE UNIT

**324** PROBABILITY SETTING UNIT

**303** HISTORY INFORMATION STORAGE UNIT

SYSTEM STATE

HISTORY INFORMATION

**309** CAUSE ESTIMATION UNIT

ESTIMATED CAUSE

STATE TRANSITION SETTING UNIT

**321**

STATE TRANSITION INFORMATION

STATE TRANSITION INFORMATION

**302** STATE DETECTION UNIT

**304** STATE TRANSITION STORAGE UNIT

STATE TRANSITION INFORMATION

**306** TRANSITION STATE DETERMINATION UNIT

DETERMINATION LOGIC DETERMINATION RESULT

**307** DISPLAY CONTROL UNIT

DETERMINATION LOGIC DETERMINATION RESULT

**308** DISPLAY UNIT

N

MEASUREMENT INFORMATION PERIPHERAL INFORMATION

**301** INPUT UNIT

**305** TRANSITION PROBABILITY CALCULATION UNIT

TRANSITION PROBABILITY

**323** DETERMINATION LOGIC SETTING UNIT

SUPPORT INFORMATION STORAGE UNIT

**312**

**322** PROBABILITY CALCULATION METHOD SETTING UNIT

[Fig. 6]

RATIO

F₁  F₂  F₃  F₄  FREQUENCY (BANDWIDTH)

[Fig. 7]

**54**

| MEASUREMENT SIGNAL STATE | EVENT |
|---|---|
| A | - (NORMAL) |
| B | - (NORMAL) |
| C | GROUND SHORT-CIRCUIT (TRANSIENT) |
| ⋮ | ⋮ |

[Fig. 8]

[Fig. 9]

[Fig. 10A]

51

| WIND BLOWING ($X_1$) | |
|---|---|
| T | F |
| 0.40 | 0.60 |

[Fig. 10B]

52

| WIND BLOWING ($X_1$) | TREE SHAKE ($X_2$) | |
|---|---|---|
| | T | F |
| T | 0.70 | 0.30 |
| F | 0.05 | 0.95 |

[Fig. 10C]

53

| WIND BLOWING ($X_1$) | TREE SHAKE ($X_2$) | THERE IS GROUND SHORT-CIRCUIT ($X_3$) | |
|---|---|---|---|
| | | $X_3=T$ | $X_3=F$ |
| T | T | 0.90 | 0.10 |
| F | T | 0.60 | 0.40 |
| T | F | 0.20 | 0.80 |
| F | F | 0.05 | 0.95 |

[Fig. 11]

```
              ┌─────────────┐
              │    START    │
              └──────┬──────┘
                     │
                     ▼
    ┌────────────────────────────────────┐
    │ INCORPORATE MEASUREMENT INFORMATION │ ～ S1
    │      AND PERIPHERAL INFORMATION     │
    └────────────────┬───────────────────┘
                     │
                     ▼
    ┌────────────────────────────────────┐
    │  INCORPORATE STATE TRANSITION       │ ～ S2
    │      INFORMATION (SYSTEM STATE)     │
    └────────────────┬───────────────────┘
                     │
                     ▼
    ┌────────────────────────────────────┐
    │  PERFORM TRANSITION PROBABILITY     │ ～ S3
    │           CALCULATION               │
    └────────────────┬───────────────────┘
                     │
                     ▼
    ┌────────────────────────────────────┐
    │ OUTPUT TRANSITION PROBABILITY       │ ～ S4
    │      CALCULATION RESULT             │
    └────────────────┬───────────────────┘
                     │
                     ▼
              ┌─────────────┐
              │     END     │
              └─────────────┘
```

[Fig. 12]

```
                    START

                      │
                      ▼
  ┌─────────────────────────────────────────┐
  │  INCORPORATE STATE TRANSITION INFORMATION │ ⟋ S11
  │            (SYSTEM STATE)                 │
  └─────────────────────────────────────────┘
                      │
                      ▼
  ┌─────────────────────────────────────────┐
  │      INCORPORATE CAUSAL RELATIONSHIP      │ ⟋ S12
  └─────────────────────────────────────────┘
                      │
                      ▼
  ┌─────────────────────────────────────────┐
  │       INCORPORATE EVENT PROBABILITY       │ ⟋ S13
  └─────────────────────────────────────────┘
                      │
                      ▼
  ┌─────────────────────────────────────────┐
  │         PERFORM CAUSE ESTIMATION          │ ⟋ S14
  └─────────────────────────────────────────┘
                      │
                      ▼
  ┌─────────────────────────────────────────┐
  │      OUTPUT CAUSE ESTIMATION RESULT       │ ⟋ S15
  └─────────────────────────────────────────┘
                      │
                      ▼
                    END
```

[Fig. 13A]

SYSTEM CONFIGURATION 60

[Fig. 13B]

WEATHER SITUATION (WIND SPEED DISTRIBUTION) 70

[Fig. 13C]

FACILITY CHARACTERISTICS

**80**

**4T**

POWER
SOURCE

POWER
SOURCE

LOAD    LOAD    **81**    LOAD

[Fig. 13D]

TREE DISTRIBUTION

**90**

**91**

**4T**

POWER
SOURCE

POWER
SOURCE

LOAD    LOAD    LOAD

**92**

[Fig. 14]

SPATIAL LOCATION (SCAN)

102

60L

POWER SOURCE  POWER SOURCE

LOAD   LOAD    LOAD

SYSTEM
CONFIGURATION

70L

WIND SPEED
DISTRIBUTION

80L

POWER SOURCE  POWER SOURCE

LOAD  LOAD     LOAD

FACILITY
CHARACTERISTICS

90L

91

POWER SOURCE  POWER SOURCE

LOAD  LOAD    LOAD

TREE
DISTRIBUTION

92

100L

101

POWER SOURCE  POWER SOURCE

LOAD  LOAD    LOAD

ACCIDENT
PREDICTION

SPATIAL
PROBABILITY
FIELD

CONDITIONAL
PROBABILITY

EXPLANATORY
SCREEN TO
OPERATOR

[Fig. 15]

TREE LOCATION                                    90A

95

POWER SOURCE    POWER SOURCE

LOAD  LOAD  LOAD

96

SPACE DISTRIBUTION 99
OF PROBABILITY

TREE DISTRIBUTION                                90L

91

POWER SOURCE    POWER SOURCE

LOAD  LOAD  LOAD

92

[Fig. 16]

**110**

ALARM DISPLAY SCREEN

**111**

【ALARM INFORMATION】
CONTACT GROUND SHORT-
CIRCUIT ACCIDENT CAN OCCUR
FROM WEATHER SITUATION AND
TREE GROWTH SITUATION

POWER
SOURCE

POWER
SOURCE

**101**

**113**

LOAD LOAD LOAD

ANALYSIS DISPLAY ~~112~~ MONTH DATE TIME MINUTES ~~114

[Fig. 17]

**120**

DETERMINATION LOGIC DISPLAY SCREEN (MODIFICATION SCREEN)

p01 → s11 → p11 → s21 → p11 → s31 → p1

p21

p02 → s12 → s22 → s32 → p2

p23

p03 → s13 → s23 → s33 → p3

p33        p33

**121**

**101**

POWER
SOURCE

POWER
SOURCE

LOAD LOAD LOAD

[Fig. 18]

**130**

RECOVERY SUPPORT INFORMATION DISPLAY SCREEN

**131**

【RECOVERY SUPPORT INFORMATION】
ESTIMATED CAUSE
RECOVERY WORK SEQUENCE
TOOL NECESSARY FOR WORK
REPLACEMENT COMPONENT

**101**

POWER SOURCE

POWER SOURCE

**81**

LOAD    LOAD    LOAD

[Fig. 19]

**140**

PRIOR COUNTERMEASURE PROPOSAL SCREEN

**141**

【PRIOR COUNTERMEASURE INFORMATION】
PLEASE GRASP GROWTH SITUATION OF TREE
ADJACENT TO ELECTRIC WIRE AND CONFIRM
WHETHER OR NOT THERE IS CONTACT WITH
ELECTRIC WIRE

**91**

POWER SOURCE

POWER SOURCE

LOAD    LOAD    LOAD

**92**

[Fig. 20]

```
                      ┌─────────────┐
                      │   START     │
                      └─────────────┘
                             │
              ┌──────────────┤
              │              ▼
              │    ┌─────────────────────────────────────┐
              │    │           NORMAL STATE              │────S21
              │    └─────────────────────────────────────┘
              │              │
              │    ┌─────────────────────────────────────┐
              │    │ PERFORM EVENT DETECTION USING        │────S22
              │    │        MEASUREMENT SIGNAL            │
              │    └─────────────────────────────────────┘
              │              │
              │              ▼                    S23
              │         ◇─────────────◇
         NO   │       DOES EVENT OCCUR?
              └──────◇                ◇
                       ◇─────────────◇
                             │ YES
              ┌──────────────┤
              │              ▼
              │    ┌─────────────────────────────────────────┐
              │    │ ESTIMATE CAUSE USING TRANSITION          │───S24
              │    │ PROBABILITY WHEN EVENT IS DETECTED       │
              │    └─────────────────────────────────────────┘
              │              │
              │    ┌─────────────────────────────────────┐
              │    │  PROPOSE COUNTERMEASURE TO OPERATOR  │───S25
              │    └─────────────────────────────────────┘
              │              │
              │    ┌─────────────────────────────────────┐
              │    │ URGE OPERATOR TO MAKE DETERMINATION  │───S26
              │    │ IN CASE WHERE CAUSE IS NOT FOUND     │
              │    └─────────────────────────────────────┘
              │              │
              │    ┌─────────────────────────────────────┐
              │    │      INSTRUCT COUNTERMEASURE         │───S27
              │    └─────────────────────────────────────┘
              │              │
              │              ▼                    S28
         NO   │         ◇─────────────◇
              └──────◇ DOES IT RETURN TO ◇
                       ◇  NORMAL STATE?  ◇
                         ◇─────────────◇
                             │ YES
                             ▼
                      ┌─────────────┐
                      │    END      │
                      └─────────────┘
```

[Fig. 21]

PREDICTION             LIKELIHOOD CALCULATION           RESAMPLING

$$X_{t-1|t-1} \longrightarrow X_{t|t-1} \longrightarrow X_{t|t-1} \longrightarrow X_{t|t}$$

$$x_{t|t-1}^{(i)} = f\left( x_{t-1|t-1}^{(i)}, v_t^{(i)} \right) \quad w_t^{(i)} = p\left( y_t \mid x_{t|t-1}^{(i)}, \theta_{obs} \right)$$

$$t+1 \Leftarrow t$$

[Fig. 22]

$\widetilde{W}_t^{(i)}$

rnd(j)

PARTICLE NUMBER

[Fig. 23]

PARTICLE NUMBER

SIGNAL LEVEL

ERROR COMPONENT

NUMBER OF INTEGERIZED PARTICLES

SIGNAL LEVEL MODIFIED BY RECEIVING ERROR DIFFUSION

ORIGINAL SIGNAL LEVEL

**EP 3 467 984 A1**

## INTERNATIONAL SEARCH REPORT

| International application No. |
|---|
| PCT/JP2017/014619 |

**A. CLASSIFICATION OF SUBJECT MATTER**
*H02J3/00*(2006.01)i, *H02J13/00*(2006.01)i

According to International Patent Classification (IPC) or to both national classification and IPC

**B. FIELDS SEARCHED**

Minimum documentation searched (classification system followed by classification symbols)
H02J3/00-5/00, H02J13/00, G06Q50/06, G06N5/00-7/06

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JDreamIII, IEEE Xplore

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2013-208042 A (Toshiba Corp.),<br>07 October 2013 (07.10.2013),<br>entire text; fig. 1 to 20<br>(Family: none) | 1-3,5-9<br>4 |
| Y<br>A | Yujia ZHOU, Modeling Weather-Related Failures of Overhead Distribution Lines, IEEE Transactions on Power Systems, 2006.11, Vol.21, No.4, pages 1683 to 1690 | 1-3,5-9<br>4 |
| Y<br>A | JP 2006-259862 A (Toshiba Corp.),<br>28 September 2006 (28.09.2006),<br>paragraphs [0006], [0024] to [0026]<br>(Family: none) | 5<br>4 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>14 June 2017 (14.06.17) | Date of mailing of the international search report<br>27 June 2017 (27.06.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

43

**INTERNATIONAL SEARCH REPORT**

International application No.

PCT/JP2017/014619

Object to be covered by this search:
In claims 1-7, 9, an object system is not limited to a power system.
A case where the object system is a power system is disclosed in the description in a specific manner for the case to be carried out by a person skilled in the art.

However, a case where the object system is not a power system is disclosed only at a suggestion level in paragraphs [0018] to [0021] and paragraph [0035] in the description. Regarding the case where the object system is not a power system, the description does not specify anything, for example, about how multiple states of the object system, state transition paths, measurement information, and periphery information related to the object system are defined, and how the transition probability is calculated, and thus the case would not be obvious to a person skilled in the art.

Therefore, the search for claims 1-7, 9 was carried out exclusively on the case where the object system is a power system, that is, on a scope where a meaningful search can be carried out.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013208042 A

### Non-patent literature cited in the description

- **TOMOYUKI HIGUCHI.** Basis of Statistical Modeling for Prediction. Kodansha, 2011

- **TORU KATAYAMA.** Nonlinear Kalman Filter. Asakura Publishing, 978-4, 254-20148, 2